(19) Europäisches Patentamt
European Patent Office
Office européen des brevets

(11) **EP 4 557 859 A1**

(12) **EUROPEAN PATENT APPLICATION**
published in accordance with Art. 153(4) EPC

(43) Date of publication:
**21.05.2025 Bulletin 2025/21**

(21) Application number: **23839081.9**

(22) Date of filing: **17.07.2023**

(51) International Patent Classification (IPC):
**H04W 72/04** (2023.01)

(52) Cooperative Patent Classification (CPC):
**H04L 1/00; H04L 5/00; H04W 72/04**

(86) International application number:
**PCT/CN2023/107792**

(87) International publication number:
**WO 2024/012595 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.07.2022 CN 202210837581**

(71) Applicant: **Datang Mobile Communications Equipment Co., Ltd.**
**Beijing 100085 (CN)**

(72) Inventors:
• **WANG, Junwei**
**Beijing 100085 (CN)**
• **GAO, Xuejuan**
**Beijing 100085 (CN)**

(74) Representative: **Studio Torta S.p.A.**
**Via Viotti, 9**
**10121 Torino (IT)**

(54) **PHYSICAL DOWNLINK CONTROL CHANNEL DETECTION METHOD, APPARATUS, AND COMMUNICATION DEVICE**

(57) A PDCCH monitoring method and apparatus and a communication device are provided. The method of embodiments of the present disclosure includes: A terminal determines at least one first cell in which PDCCH monitoring is performed, where the PDCCH monitoring is used for monitoring first DCI, and the first DCI is used for scheduling of transmission data in a plurality of cells. The terminal performs the PDCCH monitoring according to the at least one first cell.

A terminal determines at least one first cell in which PDCCH monitoring is performed, where the PDCCH monitoring is used for monitoring first DCI, and the first DCI is used for scheduling of transmission data in a plurality of cells — 401

The terminal performs the PDCCH monitoring according to the at least one first cell — 402

Fig. 4

**Description**

**CROSS-REFERENCE TO RELATED APPLICATION**

The present application claims a priority to Chinese Patent Application No. 202210837581.9 filed in China on July 15, 2022, a disclosure of which is incorporated in its entirety by reference herein.

**TECHNICAL FIELD**

The present disclosure relates to the field of communication technology, in particular to a physical downlink control channel (PDCCH) monitoring method and apparatus and a communication device.

**BACKGROUND**

In the related art, it is supported to schedule physical shared channels of a plurality of cells through one piece of downlink scheduling signaling (downlink control information, DCI). The physical shared channels include a physical downlink shared channel (PDSCH) and a physical uplink shared channel (PUSCH). On a terminal side, to receive the scheduling signaling DCI, PDCCH monitoring needs to be performed. When configured DCI of a terminal is used to schedule data in a plurality of cells, how to perform PDCCH monitoring is a problem to be solved.

**SUMMARY**

An objective of the present disclosure is to provide a PDCCH monitoring method and apparatus and a communication device, to resolve the problem of how to perform PDCCH monitoring when DCI configured by a terminal is used to schedule data in a plurality of cells.

To achieve the foregoing objective, the present disclosure provides a PDCCH monitoring method, including:

determining, by a terminal, at least one first cell in which PDCCH monitoring is performed, where the PDCCH monitoring is used for monitoring first DCI, and the first DCI is used for scheduling of transmission data in a plurality of cells; and
performing, by the terminal, the PDCCH monitoring according to the at least one first cell.

In another embodiment provided in the present disclosure, the method in the embodiments of the present disclosure further includes:

obtaining first indication information, where the first indication information is used for indicating information about a cell in which the PDCCH monitoring is performed, where
the determining, by the terminal, the at least one first cell in which the PDCCH monitoring is performed includes:
determining, according to the first indication information, the at least one first cell in which the PDCCH monitoring is performed.

In another embodiment provided in the present disclosure, the first indication information includes a search space set parameter of the cell.

In another embodiment provided in the present disclosure, the determining, according to the first indication information, the at least one first cell in which the PDCCH monitoring is performed includes:
in a case that a quantity of candidate PDCCHs of at least one aggregation level included in the search space set parameter is greater than 0, determining the cell corresponding to the search space set parameter as the first cell.

In another embodiment provided in the present disclosure, the method in the embodiments of the present disclosure further includes:

determining a PDCCH monitoring occasion and candidate PDCCH information corresponding to each first cell, where the candidate PDCCH information includes a control-channel element (CCE) aggregation level and a quantity of candidate PDCCHs corresponding to the CCE aggregation level, where
the performing, by the terminal, the PDCCH monitoring according to the at least one first cell includes:
performing the PDCCH monitoring according to the PDCCH monitoring occasion and the candidate PDCCH information corresponding to each first cell.

In another embodiment provided in the present disclosure, the determining the PDCCH monitoring occasion and the candidate PDCCH information corresponding to each first cell includes:

in a case that the first cell is a scheduling cell, determining a PDCCH monitoring occasion and candidate PDCCH information corresponding to the scheduling cell according to a search space set parameter of the scheduling cell;
in a case that the first cell is a scheduled cell, determining a PDCCH monitoring occasion and candidate PDCCH information corresponding to the scheduled cell according to a search space set parameter of a scheduling cell and a search space set parameter of the scheduled cell.

In another embodiment provided in the present disclosure, the determining the PDCCH monitoring occasion corresponding to each first cell includes:

in a case that at least two first cells have an overlapping PDCCH monitoring occasion, selecting one first cell from the at least two first cells according to a first selection mode; and
determining the overlapping PDCCH monitoring occasion as a PDCCH monitoring occasion corresponding to the selected first cell,
where the first selection mode includes: one or more of selecting a cell with the largest or smallest cell index value, selecting a scheduling cell, and presetting a selection order.

In another embodiment provided in the present disclosure, CCE aggregation levels corresponding to different first cells are different.
In another embodiment provided in the present disclosure, the determining the candidate PDCCH information corresponding to each first cell includes:

in a case that CCE aggregation levels corresponding to at least two first cells are the same, determining a candidate PDCCH corresponding to each first cell in the at least two first cells according to second indication information,
where the second indication information includes: identifiers of candidate PDCCHs corresponding to the at least two first cells, or identifiers of CCEs occupied by candidate PDCCHs corresponding to the at least two first cells respectively.

In another embodiment provided in the present disclosure, identifiers of candidate PDCCHs corresponding to different first cells are different, offset information of a CCE index corresponding to each first cell is the same, and the offset information is used for determining a reference position of the candidate PDCCH.
In another embodiment provided in the present disclosure, identifiers of CCEs occupied by candidate PDCCHs corresponding to different first cells are different, a CCE occupied by a candidate PDCCH corresponding to each first cell is determined according to a CCE occupied by a candidate PDCCH corresponding to a first cell preceding the each first cell according to a first sorting result, and the first sorting result is obtained by sorting the at least two first cells according to a preset order.
The present disclosure further provides in some embodiments a PDCCH monitoring method, including: sending, by a network side device, first indication information, where the first indication information is used for indicating information about a cell in which PDCCH monitoring is performed, the PDCCH monitoring is used for monitoring first DCI, and the first DCI is used for scheduling of transmission data in a plurality of cells.
In another embodiment provided in the present disclosure, the first indication information includes a search space set parameter of the cell.
In another embodiment provided in the present disclosure, in a case that a quantity of candidate PDCCHs of at least one aggregation level in the search space set parameter is greater than 0, the first indication information is used for indicating that the cell corresponding to the search space set parameter is the cell in which the PDCCH monitoring is performed.
In another embodiment provided in the present disclosure, the search space set parameter includes a CCE aggregation level, CCEs corresponding to different first cells have different aggregation levels, and the first cell is the cell in which the PDCCH monitoring is performed.
In another embodiment provided in the present disclosure, the search space set parameter includes a CCE aggregation level; and the method further includes:

in a case that CCE aggregation levels corresponding to at least two first cells are the same, sending second indication information,
where the second indication information includes identifiers of candidate PDCCHs corresponding to the at least two first cells, or includes identifiers of CCEs occupied by candidate PDCCHs corresponding to the at least two first cells respectively.

In another embodiment provided in the present disclosure, identifiers of candidate PDCCHs corresponding to different first cells are different, offset information of a CCE index corresponding to each first cell is the same, and the offset information is used for determining a reference position of the candidate PDCCH.

In another embodiment provided in the present disclosure, identifiers of CCEs occupied by candidate PDCCHs corresponding to different first cells are different, a CCE occupied by a candidate PDCCH corresponding to each first cell is determined according to a CCE occupied by a candidate PDCCH corresponding to a first cell preceding the each first cell according to a first sorting result, and the first sorting result is obtained by sorting the at least two first cells according to a preset order.

The present disclosure further provides in some embodiments a PDCCH monitoring apparatus, applied to a terminal, including a memory, a transceiver, and a processor,

where the memory is configured to store a computer program; the transceiver is configured to send and receive data under the control of the processor; and the processor is configured to read the computer program in the memory and perform the following operations:

determining at least one first cell in which PDCCH monitoring is performed, where the PDCCH monitoring is used for monitoring first DCI, and the first DCI is used for scheduling of transmission data in a plurality of cells; and
performing the PDCCH monitoring according to the at least one first cell.

In another embodiment provided in the present disclosure, the processor, when executing the program, further implements the following steps:

obtaining first indication information through the transceiver, where the first indication information is used for indicating information about a cell in which the PDCCH monitoring is performed; and
determining, according to the first indication information, the at least one first cell in which the PDCCH monitoring is performed.

In another embodiment provided in the present disclosure, the first indication information includes a search space set parameter of the cell.

In another embodiment provided in the present disclosure, the processor, when executing the program, further implements the following step:

in a case that a quantity of candidate PDCCHs of at least one aggregation level included in the search space set parameter is greater than 0, determining the cell corresponding to the search space set parameter as the first cell.

In another embodiment provided in the present disclosure, the processor, when executing the program, further implements the following steps:

determining a PDCCH monitoring occasion and candidate PDCCH information corresponding to each first cell, where the candidate PDCCH information includes a CCE aggregation level and a quantity of candidate PDCCHs corresponding to the CCE aggregation level; and
performing the PDCCH monitoring according to the PDCCH monitoring occasion and the candidate PDCCH information corresponding to each first cell.

In another embodiment provided in the present disclosure, the processor, when executing the program, further implements the following step:

in a case that the first cell is a scheduling cell, determining a PDCCH monitoring occasion and candidate PDCCH information corresponding to the scheduling cell according to a search space set parameter of the scheduling cell;
in a case that the first cell is a scheduled cell, determining a PDCCH monitoring occasion and candidate PDCCH information corresponding to the scheduled cell according to a search space set parameter of a scheduling cell and a search space set parameter of the scheduled cell.

In another embodiment provided in the present disclosure, the processor, when executing the program, further implements the following steps:

in a case that at least two first cells have an overlapping PDCCH monitoring occasion, selecting one first cell from the at least two first cells according to a first selection mode; and
determining the overlapping PDCCH monitoring occasion as a PDCCH monitoring occasion corresponding to the selected first cell,
where the first selection mode includes: one or more of selecting a cell with the largest or smallest cell index value,

selecting a scheduling cell, and presetting a selection order.

In another embodiment provided in the present disclosure, CCE aggregation levels corresponding to different first cells are different.

In another embodiment provided in the present disclosure, the processor, when executing the program, further implements the following step:

in a case that CCE aggregation levels corresponding to at least two first cells are the same, determining a candidate PDCCH corresponding to each first cell in the at least two first cells according to second indication information, where the second indication information includes: identifiers of candidate PDCCHs corresponding to the at least two first cells, or identifiers of CCEs occupied by candidate PDCCHs corresponding to the at least two first cells respectively.

The present disclosure further provides in some embodiments a PDCCH monitoring apparatus, applied to a network side device, including a memory, a transceiver, and a processor,

where the memory is configured to store a computer program; the transceiver is configured to send and receive data under the control of the processor; and the processor is configured to read the computer program in the memory and perform the following operation:

sending first indication information through the transceiver, where the first indication information is used for indicating information about a cell in which PDCCH monitoring is performed, the PDCCH monitoring is used for monitoring first DCI, and the first DCI is used for scheduling of transmission data in a plurality of cells.

The present disclosure further provides in some embodiments a PDCCH monitoring apparatus, applied to a terminal, including:

a first determining unit, configured to determine at least one first cell in which PDCCH monitoring is performed, where the PDCCH monitoring is used for monitoring first DCI, and the first DCI is used for scheduling of transmission data in a plurality of cells; and

a first monitoring unit, configured to perform the PDCCH monitoring according to the at least one first cell.

The present disclosure further provides in some embodiments a PDCCH monitoring apparatus, applied to a network side device, including:

a first sending unit, configured to send first indication information, where the first indication information is used for indicating information about a cell in which PDCCH monitoring is performed, the PDCCH monitoring is used for monitoring first DCI, and the first DCI is used for scheduling of transmission data in a plurality of cells.

The present disclosure further provides in some embodiments a processor-readable storage medium, where the processor-readable storage medium stores program instructions, and the program instructions are used for enabling a processor to perform the steps of the PDCCH monitoring method described above.

The foregoing technical solutions of the present disclosure at least have the following beneficial effects.

In the embodiments of the present disclosure, a terminal determines at least one first cell in which PDCCH monitoring is performed, where the PDCCH monitoring is used for monitoring first DCI, and the first DCI is used for scheduling of transmission data in a plurality of cells, and the terminal performs the PDCCH monitoring based on the plurality of first cells, thereby achieving the objective of performing PDCCH monitoring when the terminal is configured with DCI used for scheduling of transmission data in a plurality of cells.

## BRIEF DESCRIPTION OF THE DRAWINGS

Fig. 1 is a structural diagram of a network system to which an embodiment of the present disclosure is applicable;
Fig. 2 is a schematic diagram of two scheduling modes of single-cell scheduling;
Fig. 3 is a schematic diagram of multi-cell scheduling;
Fig. 4 is a first schematic flowchart of a PDCCH monitoring method according to an embodiment of the present disclosure;
Fig. 5 is a schematic diagram of different cells performing PDCCH monitoring in different slots according to an embodiment of the present disclosure;
Fig. 6 is a schematic diagram of explicitly indicating a monitoring occasion according to an embodiment of the present disclosure;
Fig. 7 is a first schematic diagram of candidate PDCCHs corresponding to different cells according to an embodiment of the present disclosure;

Fig. 8 is a second schematic diagram of candidate PDCCHs corresponding to different cells according to an embodiment of the present disclosure;

Fig. 9 is a third schematic diagram of candidate PDCCHs corresponding to different cells according to an embodiment of the present disclosure;

Fig. 10 is a fourth schematic diagram of candidate PDCCHs corresponding to different cells according to an embodiment of the present disclosure;

Fig. 11 is a second schematic flowchart of a PDCCH monitoring method according to an embodiment of the present disclosure;

Fig. 12 is a first structural block diagram of a PDCCH monitoring apparatus according to an embodiment of the present disclosure;

Fig. 13 is a second structural block diagram of a PDCCH monitoring apparatus according to an embodiment of the present disclosure;

Fig. 14 is a first structural diagram of modules of a PDCCH monitoring apparatus according to an embodiment of the present disclosure;

Fig. 15 is a second structural diagram of modules of a PDCCH monitoring apparatus according to an embodiment of the present disclosure.

## DETAILED DESCRIPTION

The technical solution provided in the embodiments of the present disclosure is applicable to various systems. For example, the systems to which the technical solution is applicable may be a Global System for Mobile communications (GSM), a Code Division Multiple Access (CDMA) system, a Wideband CDMA (WCDMA) system, a Time Division Synchronous CDMA (TD-SCDMA) system, a general packet radio service (GPRS) system, a Long Term Evolution (LTE) system, a Time Division-LTE (TD-LTE) system, a Frequency Division Duplexing-LTE (FDD-LTE) system, an LTE-Advanced (LTE-A) system, a Universal Mobile Telecommunication System (UMTS), a Worldwide Interoperability For Microwave Access (WiMAX) system, a 5th Generation (5G) New Radio (NR) system, and the like. All the various systems include a terminal device and a network device. The system may further include a core network (CN) part, for example, an Evolved Packet System (EPS), a 5G System (5GS), a 5G Core Network (5GC), and the like.

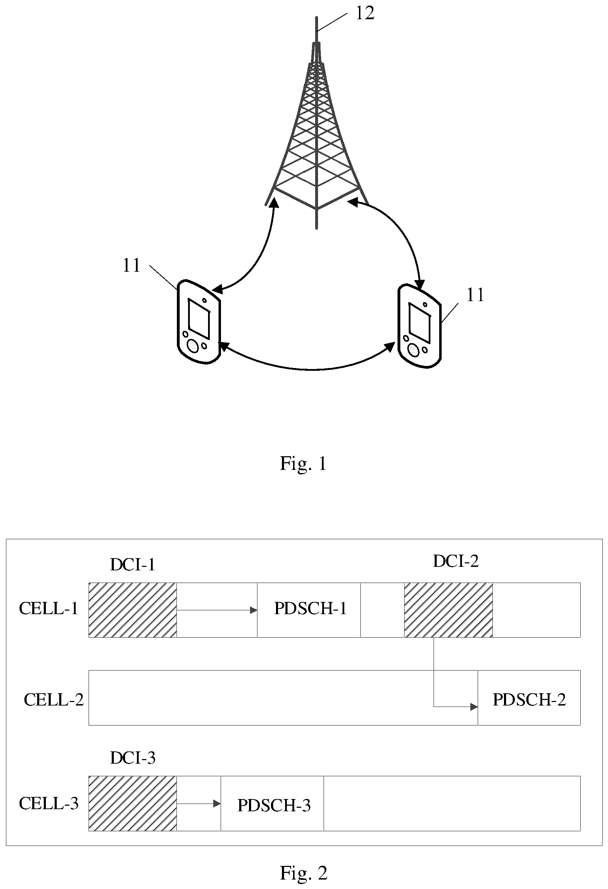

Fig. 1 is a block diagram of a wireless communication system to which an embodiment of the present disclosure is applicable. The wireless communication system includes a terminal 11 and a network side device 12, a relay system, or a Reconfigurable Intelligence Surface (RIS) system. The terminal 11 may be referred to as a terminal device or user equipment (UE). The terminal 11 may be a terminal side device such as a mobile phone, a Tablet Personal Computer, a Laptop Computer or a notebook computer, a personal digital assistant (PDA), a palmtop computer, a netbook, an Ultra-Mobile Personal Computer (UMPC), a Mobile Internet Device (MID), a wearable device or vehicle UE (VUE), pedestrian UE (PUE), and the like. The wearable device includes a wristband, a headset, glasses, and the like. It needs to be noted that a specific type of the terminal 11 is not limited in some embodiments of the present disclosure. The network side device 12 may be a base station or a CN. The base station may be referred to as a node B, an evolved node B (eNB), an access point, a base transceiver station (BTS), a radio base station, a radio transceiver, a basic service set (BSS), an extended service set (ESS), a Bnode, an eNB, a home node B, a home eNB (HeNB), a wireless local area network (WLAN) access point, a Wi-Fi node, a transmitting receiving point (TRP) or another appropriate term in the field. Provided that the same technical effect is achieved, the base station is not limited to a specific technical term. It needs to be noted that only a base station in an NR system is used as an example in the embodiments of the present disclosure. However, a specific type of the base station is not limited.

The following clearly and completely describes the technical solutions in the embodiments of the present disclosure with reference to the accompanying drawings in the embodiments of the present disclosure. Apparently, the described embodiments are only some embodiments of the present disclosure rather than all the embodiments. All other embodiments obtained by persons of ordinary skill in the art based on the embodiments of the present disclosure without creative efforts fall within the protection scope of the present disclosure.

To enable a person skilled in the art to better understand the embodiments of the present disclosure, the following descriptions are provided first.

### 1. Single-cell scheduling and multi-cell scheduling

In a 5GS, it is supported to schedule data on only one cell through one piece of scheduling signaling, and the scheduled data may be a PDSCH or a PUSCH. The following two cases are categorized according to whether the scheduling signaling DCI and the scheduled data are on one cell.

Self-scheduling: The DCI and the scheduled data are on one cell.

Cross-carrier scheduling: The DCI and the scheduled data are not on one carrier.

As shown in Fig. 2, DCI-1 and scheduled PDSCH-1 are both on CELL-1 (a cell 1). PDSCH-1 is self-scheduling of CELL-1. In this case, a scheduling cell (a cell that transmits a DCI) is CELL-1, and a scheduled cell (a cell that transmits data) is CELL-1.

DCI-2 and scheduled PDSCH-2 are allocated on different cells, and PDSCH-2 is cross-carrier scheduling. In this case, a scheduling cell (a cell that transmits a DCI) is CELL-1, and a scheduled cell (a cell that transmits data) is CELL-2.

DCI-3 and scheduled PDSCH-3 are both on CELL-3 (a cell 3). PDSCH-3 is self-scheduling of CELL-3. In this case, a scheduling cell (a cell that transmits a DCI) is CELL-3, and a scheduled cell (a cell that transmits data) is CELL-3.

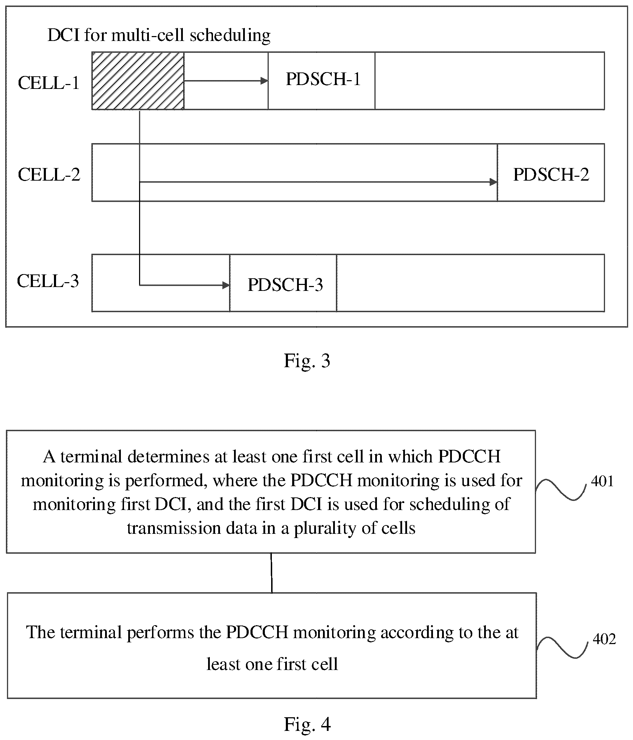

To reduce overhead of scheduling signaling, it is supported to schedule data on a plurality of cells through one DCI. To be specific, scheduling signaling DCI is sent on one cell, and data scheduled by the scheduling signaling DCI may be sent on a plurality of cells. As shown in Fig. 3, scheduling signaling DCI is sent on CELL-1 (a cell 1). The signaling schedules PDSCHs on three cells. CELL-1 in Fig. 3 is a scheduling cell (a cell that sends a DCI), and is also a scheduled cell (a cell that transmits data). CELL-2 and CELL-3 are scheduled cells (cells that transmit data).

It needs to be noted that the scheduling signaling DCI is carried on a PDCCH. To receive the DCI, a terminal needs to monitor candidate channels of a plurality of PDCCHs. Therefore, the terminal does not know whether a base station has sent the DCI, and the terminal needs to monitor all candidate PDCCHs. This process is referred to as PDCCH monitoring.

2. Configuration of a search space set and a candidate channel of a PDCCH that requires monitoring.

A PDCCH is used for sending DCI. Information transmitted by the PDCCH includes common control information (system information, paging information, and the like) and user specific control information (a downlink resource allocation indication, uplink resource scheduling, a triggered PRACH, an uplink power control parameter, and the like).

For ease of description of the PDCCH, the concept of a control resource set (CORESET) is introduced into NR. The CORESET represents a size of a PDCCH channel resource block (RB). One CORESET is formed by a plurality of CCEs. Each CCE is formed by six RBs. In current protocols, one CORESET has at most 96 physical resource blocks (PRBs) in frequency domain and at most three symbols in time domain. In other words, the CORESET is formed by at most 48 CCEs.

One CORESET includes a plurality of candidate PDCCHs. All these candidate control channels require monitoring by UE. Generally, any one or more CCEs may form one candidate PDCCH. It is currently stipulated in the standards that a PDCCH formed by one CCE is called a candidate PDCCH with a CCE aggregation level being 1, a PDCCH formed by two CCEs is called a candidate PDCCH with a CCE aggregation level being 2, a PDCCH formed by four CCEs is called a candidate PDCCH with a CCE aggregation level being 4, and so on. It is stipulated in the current standards and protocols that supported CCE aggregation levels are 1, 2, 4, 8, and 16.

In one CORESET, there may be a plurality of candidate PDCCHs with the same CCE aggregation level, and quantities in the current standards and protocols are 0, 1, 2, 3, 4, 5, 6, and 8.

A search space set defines a time range in which UE needs to perform PDCCH monitoring (it should be noted that a frequency domain width and a time length range have been defined in the CORESET). The search space set includes a common search space set (CSS) and a UE specific search space set (USS). The CSS is a search space set in which all UEs or a group of UEs need to perform PDCCH monitoring, and is denoted as a CSS. The USS is a search space set that is specially separately configured by the base station for single UE and in which the UE that requires the configuration performs PDCCH monitoring, and is denoted as a USS.

The configuration of the USS mainly includes several parameters as follows:

> 1. monitoringSlotPeriodicity AndOffset
> The parameter includes two pieces of information: One piece is a monitoring periodicity T in the unit of slots, and the other piece is an offset in the unit of slots. When T = 16 and offset = 1, it represents that the terminal needs to perform PDCCH monitoring in a slot 1, a slot 17, a slot 33, .... A maximum T in the standards is 20480.
> 2: monitoringSymbolsWithinSlot
> The parameter represents a position of the first symbol of a PDCCH monitoring occasion in a specific slot.
> 3: nrofCandidates

The parameter represents candidate PDCCH information when the terminal performs PDCCH monitoring. The configuration includes two pieces of information:

> an aggregation level (L): a quantity of CCEs included in a candidate PDCCH; and
> a quantity of candidate PDCCHs of a corresponding aggregation level.

An example of the definition of the foregoing search space set is provided as follows:

> monitoringSlotPeriodicity AndOffset = s14,0 (T = 4, offset = 0);

monitoringSymbolsWithinSlot = 1000000 1000000 (PDCCH monitoring occasions are located in the first symbol and the seventh symbol of 14 symbols); and
nrofCandidates = aggregationLevel4 n4 (L = 4, a quantity of candidate PDCCHs is 4).

When "scheduling data on a plurality of cells through one DCI" is configured for the terminal, how to allocate a PDCCH monitoring task (monitoring of a plurality of configured candidate PDCCHs) to one or more cells to enable the terminal to determine a workload of PDCCH monitoring of a related cell is a problem to be solved.

As shown in Fig. 4, the present disclosure provides in some embodiments a PDCCH monitoring method, including the following steps.

A step 401 includes: determining, by a terminal, at least one first cell in which PDCCH monitoring is performed, where the PDCCH is used for carrying first DCI, and the first DCI is used for scheduling of transmission data in a plurality of cells.

In this step, the terminal may determine, in an explicit or implicit manner, at least one first cell in which PDCCH monitoring is performed. For example, the first cell is determined according to first indication information sent by a network side device, or the first cell is determined according to an agreement in a protocol.

The first cell may be a scheduling cell or may be a scheduled cell. The scheduling cell in the embodiments of the present disclosure is a cell that transmits the first DCI, and the scheduled cell is a cell that transmits data scheduled by the first DCI.

The PDCCH monitoring in the embodiments of the present disclosure may also be referred to as PDCCH detection.

A Step 402 includes: performing, by the terminal, the PDCCH monitoring according to the at least one first cell.

For example, the terminal performs PDCCH monitoring according to a PDCCH monitoring module corresponding to each first cell.

The performing the PDCCH monitoring according to the first cell refers to: counting a workload or a task of the PDCCH monitoring for the cell, i.e., related PDCCH monitoring is undertaken by a PDCCH monitoring module corresponding to the cell.

For example, the terminal determines that a PDCCH monitoring load is only counted for a scheduling cell, a PDCCH monitoring module corresponding to the scheduling cell is used to perform PDCCH monitoring. For another example, the terminal determines that a PDCCH monitoring load is only counted for a scheduled cell, a PDCCH monitoring module corresponding to the scheduled cell is used to perform PDCCH monitoring. For still another example, the terminal determines that a PDCCH monitoring load is counted for a plurality of cells (including at least one of a scheduling cell and a scheduled cell), a PDCCH monitoring module corresponding to each cell is used to perform PDCCH monitoring.

It needs to be noted that the PDCCH monitoring load (or PDCCH detection load) in the embodiments of the present disclosure is monitoring of a specific quantity of candidate PDCCHs. In another embodiment provided in the present disclosure, CCEs corresponding to a specific quantity of candidate PDCCHs do not have an intersection (overlap).

It needs to be noted that unless otherwise stated, the PDCCH monitoring in the embodiments of the present disclosure refers to monitoring of control channels used for scheduling of multi-cell data, including: a physical downlink shared data channel, or/and a PUSCH.

In the embodiments of the present disclosure, a terminal determines at least one first cell in which PDCCH monitoring is performed, where the PDCCH monitoring is used for monitoring first DCI, and the first DCI is used for scheduling of transmission data in a plurality of cells, and the terminal performs the PDCCH monitoring based on the plurality of first cells, thereby achieving the objective of performing PDCCH monitoring when the terminal is configured with DCI used for scheduling of transmission data in a plurality of cells.

In another embodiment provided in the present disclosure, the method in the embodiments of the present disclosure further includes:

obtaining first indication information, where the first indication information is used for indicating information about a cell in which the PDCCH monitoring is performed, where
the determining, by the terminal, the at least one first cell in which the PDCCH monitoring is performed includes:
determining, according to the first indication information, the at least one first cell in which the PDCCH monitoring is performed.

The at least one first cell in which PDCCH monitoring is performed may be explicitly or implicitly indicated through the first indication information. For example, an identifier of the at least one cell is explicitly indicated through the first indication information, or the first cell is implicitly indicated through the first indication information by indicating a search space set.

The first indication information may be sent through higher layer signaling.

In another embodiment provided in the present disclosure, the first indication information includes a search space set parameter of the cell.

Search space set parameters corresponding to different cells may be separately configured, thereby achieving the effect that different cells correspond to different parameters.

The search space set parameter is specifically a search space set parameter for multi-cell scheduling. The search space set parameter includes at least one of monitoringSlotPeriodicity AndOffset, monitoringSymbolsWithinSlot, and nrofCandidates.

The first cell may be implicitly indicated through whether a search space set parameter for multi-cell scheduling is configured.

In another embodiment provided in the present disclosure, the determining, according to the first indication information, the at least one first cell in which the PDCCH monitoring is performed includes:

in a case that a quantity of candidate PDCCHs of at least one aggregation level included in the search space set parameter is greater than 0, determining the cell corresponding to the search space set parameter as the first cell.

For example, if the quantity of candidate PDCCHs of at least one aggregation level included in the search space set parameter is greater than 0 and the search space set parameter is a search space set parameter corresponding to a scheduling cell, the scheduling cell is determined as the first cell.

Alternatively, if the quantity of candidate PDCCHs of at least one aggregation level included in the search space set parameter is greater than 0 and the search space set parameter is a search space set parameter corresponding to a scheduled cell, the scheduled cell is determined as the first cell.

Alternatively, if the quantity of candidate PDCCHs of at least one aggregation level included in the search space set parameter is greater than 0 and the search space set parameter is a search space set parameter corresponding to at least one cell, the at least one cell is determined as the first cell.

In another embodiment provided in the present disclosure, the method in the embodiments of the present disclosure further includes:

determining a PDCCH monitoring occasion and candidate PDCCH information corresponding to each first cell, where the candidate PDCCH information includes a CCE aggregation level and a quantity of candidate PDCCHs corresponding to the CCE aggregation level, where

the performing, by the terminal, the PDCCH monitoring according to the at least one first cell includes:

performing the PDCCH monitoring according to the PDCCH monitoring occasion and the candidate PDCCH information corresponding to each first cell.

The determining the PDCCH monitoring occasion and the candidate PDCCH information corresponding to each first cell includes:

in a case that the first cell is a scheduling cell, determining one or more PDCCH monitoring occasions and candidate PDCCH information corresponding to the scheduling cell according to one or more search space set parameters of the scheduling cell;

in a case that the first cell is a scheduled cell, determining one or more PDCCH monitoring occasions and candidate PDCCH information corresponding to the scheduled cell according to one or more search space set parameters of a scheduling cell and one or more search space set parameters of the scheduled cell.

In an optional implementation, if a search space set for multi-cell scheduling is configured on only a scheduling cell and the candidate PDCCH parameter nrofCandidates is greater than 0, it is considered that PDCCH monitoring of DCI for multi-cell scheduling is counted for only the scheduling cell.

It is configured that the value of nrofCandidates of the search space set for multi-cell scheduling of the scheduling cell is greater than 0 to implicitly indicate that PDCCH monitoring is counted for the scheduling cell, or otherwise it represents that PDCCH monitoring is not counted for the scheduling cell. The terminal calculates the PDCCH monitoring occasion and the candidate PDCCH information of the scheduling cell according to the search space set parameter (for example, a CORESET sequence number, PDCCH monitoring nrofCandidates, monitoringSlotPeriodicityAndOffset, monitoringSymbolsWithinSlot, and the like) of the scheduling cell.

In an optional implementation, if a search space set for multi-cell scheduling is configured on only one scheduled cell and the candidate PDCCH parameter nrofCandidates is greater than 0, it is considered that PDCCH monitoring of DCI for multi-cell scheduling is counted for only the scheduled cell, and a PDCCH monitoring occasion and candidate PDCCH information of the DCI for multi-cell scheduling are calculated according to search space set parameters (for example, PDCCH monitoring nrofCandidates, or/and monitoringSlotPeriodicityAndOffset, or/and monitoringSymbolsWithinSlot) configured on a scheduling cell and the scheduled cell.

It is configured that the value of nrofCandidates of the search space set for multi-cell scheduling of one scheduled cell is greater than 0 to implicitly indicate that PDCCH monitoring is counted for the scheduled cell, or otherwise it represents that PDCCH monitoring is not counted for the scheduled cell.

In an optional implementation, if a search space set for multi-cell scheduling is configured on two or more cells and the candidate PDCCH parameter nrofCandidates is greater than 0, it is considered that PDCCH monitoring of DCI for multi-cell scheduling is counted for a plurality of cells; and a PDCCH monitoring occasion and candidate PDCCH information of the DCI for multi-cell scheduling are determined according to search space set parameters of a scheduling cell and a scheduled cell.

In a first specific embodiment of the present disclosure, the first cell is implicitly indicated by configuring the value of nrofCandidates of the search space set for multi-cell scheduling.

In this embodiment, whether PDCCH monitoring corresponding to the DCI for multi-cell scheduling is allocated to a configured cell is implicitly indicated by configuring the value of nrofCandidates of the search space set for multi-cell scheduling, and the configured cell may be at least one of a scheduling cell and a scheduled cell.

Specifically, when "configured quantities of candidate PDCCHs of all aggregation levels are 0", the terminal considers that PDCCH monitoring of multi-cell scheduling is not counted for the configured cell, or otherwise it represents that PDCCH monitoring is counted for the configured cell.

Example 1, a base station side: For a cell CELL-1, the configured value of nrofCandidates of the search space set for multi-cell scheduling is as follows:

nrofCandidates             SEQUENCE {

    aggregationLevel1 = n0     //selection range {n0, n1, n2, n3, n4, n5, n6, n8},

    aggregationLevel2 = n0     //selection range {n0, n1, n2, n3, n4, n5, n6, n8},

    aggregationLevel4 = n0     //selection range {n0, n1, n2, n3, n4, n5, n6, n8},

    aggregationLevel8 = n0     //selection range {n0, n1, n2, n3, n4, n5, n6, n8},

    aggregationLevel16 = n0    //selection range {n0, n1, n2, n3, n4, n5, n6, n8},

dci-Formats-R18     ENUMERATED {formats0-X-And-1-X, formats0-X-And-1-X} //it indicates that configurations of a related search space set are related to multi-cell scheduling, formats0-X represents a format of DCI for multi-cell scheduling for scheduling uplink data, and formats1-X represents a format of DCI for multi-cell scheduling for scheduling downlink data.

It needs to be noted that in the configured search space set, a format (format 0_X, or format 1_X) of DCI used for scheduling a plurality of cells is configured, and it is considered that the search space set is a search space set for multi-cell scheduling (same below).

The quantities of candidate PDCCHs of all aggregation levels are 0, and CELL-1 may be a scheduling cell or may be a scheduled cell.

Terminal side: Because the quantities of candidate PDCCHs of all aggregation levels are 0, the terminal considers that PDCCH monitoring corresponding to the search space set for multi-cell scheduling is not allocated to CELL-1 or is not counted for CELL-1. In addition, a format of DCI for multi-cell scheduling correlated with the search space set is not monitored, and a length of scheduling information of the format of the DCI for multi-cell scheduling is also not counted for the cell.

Example 2, a base station side: For CELL-2, the configured value of nrofCandidates of the search space set for multi-cell scheduling is as follows:

<div align="center">nrofCandidates                 SEQUENCE {</div>

aggregationLevel1 = n0      //selection range {n0, n1, n2, n3, n4, n5, n6, n8},

aggregationLevel2 = n0      //selection range {n0, n1, n2, n3, n4, n5, n6, n8},

aggregationLevel4 = n0      //selection range {n0, n1, n2, n3, n4, n5, n6, n8},

aggregationLevel8 = n4      //selection range {n0, n1, n2, n3, n4, n5, n6, n8},

aggregationLevel16 = n8     //selection range {n0, n1, n2, n3, n4, n5, n6, n8},

dci-Formats-R18    ENUMERATED {formats0-X-And-1-X, formats0-X-And-1-X} //it indicates that configurations of a related search space set are related to multi-cell scheduling, formats0-X represents a format of DCI for multi-cell scheduling for scheduling uplink data, and formats1-X represents a format of DCI for multi-cell scheduling for scheduling downlink data.

As can be seen, quantities (which are respectively 4 and 8) of candidate PDCCHs of the aggregation levels L = 8 and L = 16 are both greater than 0, and CELL-2 may be a scheduling cell or may be a scheduled cell.

Terminal side: The terminal receives a search space set parameter for multi-cell scheduling configured by the base station. Because the quantities of candidate PDCCHs of the aggregation levels L = 8 and L = 16 are both greater than 0, the terminal considers that the PDCCH monitoring corresponding to the configured search space set is allocated to CELL-2 or is counted for CELL-2. In addition, a format of DCI for multi-cell scheduling correlated with the search space set needs to be monitored, and a length of scheduling information of the format of the DCI for multi-cell scheduling is also counted for the cell.

It needs to be noted that for multi-cell scheduling, the terminal does not expect quantities of candidate PDCCHs of all aggregation levels of all cells that participate in scheduling to be 0, i.e., the terminal expects a quantity of candidate PDCCHs corresponding to at least one aggregation level configured on at least one cell to be greater than 0.

In this embodiment, the UE determines, by determining configured quantities of all candidate PDCCHs of all aggregation levels, a cell to which the PDCCH monitoring load is to be allocated. The allocation of candidate PDCCH monitoring work of multi-cell scheduling signaling can be indicated without increasing the complexity of related protocols, and the work may be allocated to a scheduling cell or a scheduled cell, or may be allocated to a plurality of cells.

In another embodiment provided in the present disclosure, monitoring offsets corresponding to different first cells are different. The monitoring offset may be indicated through monitoringSlotPeriodicity AndOffset in the search space set parameter. The monitoring offset may be used for indicating offset information of PDCCH monitoring performed by the terminal in one periodicity.

In another embodiment provided in the present disclosure, the determining the PDCCH monitoring occasion corresponding to each first cell includes:

    in a case that at least two first cells have an overlapping PDCCH monitoring occasion, selecting one first cell from the at least two first cells according to a first selection mode; and
    determining the overlapping PDCCH monitoring occasion as a PDCCH monitoring occasion corresponding to the selected first cell,
    where the first selection mode includes: one or more of selecting a cell with the largest or smallest cell index value, selecting a scheduling cell, and presetting a selection order.

In another embodiment provided in the present disclosure, monitoring offsets corresponding to different first cells are the same, and in a case that it is determined according to the monitoring offset and the candidate PDCCH information that at least two first cells have an overlapping PDCCH monitoring occasion, one first cell is selected from the at least two cells according to a first selection mode.

In a second embodiment of the present disclosure, when the search space set for the DCI for multi-cell scheduling is configured on a plurality of cells, the base station counts PDCCH monitoring to a plurality of scheduling cells in a time division manner. In other words, different scheduling cells monitor a PDCCH at different time (i.e., have different monitoring occasions). For example, PDCCH monitoring is performed in different slots, or on different symbols in a same slot.

An example of "respective configuration of search space sets for scheduled cells is implemented by configuring different offset values" is used for description below.

Base station side configuration:

Example 1: CELL-1, CELL-2, CELL-3, and CELL-4 participate in multi-carrier scheduling, and configured values of "monitoringSlotPeriodicity AndOffset" of the search space set for multi-cell scheduling are as follows:

configuration parameters of CELL-1 (a scheduling cell/scheduled cell):

searchspace { monitoringSlotPeriodicity AndOffset periodicity = sl4, offset = 0 //selection range (0..3) monitoringSymbolsWithinSlot = 1000000 0000000 //a monitoring occasion is in the first symbol of a slot dci-Formats-R18 ENUMERATED {formats0-X-And-1-X, formats0-X-And-1-X} //it indicates that configurations of a related search space set are related to multi-cell scheduling, formats0-X represents a format of DCI for multi-cell scheduling for scheduling uplink data, and formats1-X represents a format of DCI for multi-cell scheduling for scheduling downlink data};

configuration parameters of CELL-2 (a scheduled cell):

searchspace { monitoringSlotPeriodicity AndOffset sl periodicity = sl4, offset = 4, 1 //selection range (0..3) dci-Formats-R18 ENUMERATED {formats0-X-And-1-X, formats0-X-And-1-X} //it indicates that configurations of a related search space set are related to multi-cell scheduling, formats0-X represents a format of DCI for multi-cell scheduling for scheduling uplink data, and formats1-X represents a format of DCI for multi-cell scheduling for scheduling downlink data};

configuration parameters of CELL-3 (a scheduled cell):

searchspace { monitoringSlotPeriodicity AndOffset periodicity = sl4, offset = 2 //selection range (0..3) dci-Formats-R18 ENUMERATED {formats0-X-And-1-X, formats0-X-And-1-X} //it indicates that configurations of a related search space set are related to multi-cell scheduling, formats0-X represents a format of DCI for multi-cell scheduling for scheduling uplink data, and formats1-X represents a format of DCI for multi-cell scheduling for scheduling downlink data}; and

configuration parameters of CELL-4 (a scheduled cell):

searchspace { monitoringSlotPeriodicity AndOffset periodicity = sl4, offset = 3 //selection range (0..3) dci-Formats-R18 ENUMERATED {formats0-X-And-1-X, formats0-X-And-1-X} //it indicates that configurations of a related search space set are related to multi-cell scheduling, formats0-X represents a format of DCI for multi-cell scheduling for scheduling uplink data, and formats1-X represents a format of DCI for multi-cell scheduling for scheduling downlink data}.

Actions performed on a terminal side:

On a scheduled cell, if a configured search space set is for multi-cell scheduling, the terminal considers that configured monitoringSlotPeriodicityAndOffset is valid, and determines a PDCCH monitoring occasion and a monitoring load of the cell by using the parameter and nrofCandidates in combination with "other parameters of the search space set related to multi-cell scheduling configured on a scheduling cell". In other words, "monitoringSlotPeriodicityAndOffset and nrofCandidates" configured on a scheduled cell are used in place of the two parameters in "the search space set configured on the scheduling cell" to determine a PDCCH monitoring occasion and a monitoring load of the scheduled cell.
Further, in a same multi-cell scheduling set (a set of cells that can be scheduled by one piece of scheduling signaling), periodicity values configured on different cells are the same, and offsets are different, i.e., it is ensured that monitoring occasions of different cells are in different time units (for example, different slots).
Further, in a case that it is determined according to the monitoring offset and the candidate PDCCH information that at least two first cells have an overlapping PDCCH monitoring occasion, one first cell is selected from the at least two cells according to a first selection mode.
The overlapping PDCCH monitoring occasion is determined as a PDCCH monitoring occasion corresponding to the selected first cell.
The first selection mode includes:

selecting a cell with the largest or smallest cell index value;
selecting a scheduling cell; and
performing selection according to a preset selection order.

If the configuration of the parameter "monitoringSlotPeriodicity AndOffset" leads to that different cells have an intersection in a same time unit (for example, different slots), one of the cells may be selected according to the first selection mode to perform PDCCH monitoring.

In addition, before selection, a cell that "may make a total PDCCH monitoring load exceed a monitoring capability", especially a secondary cell, is excluded.

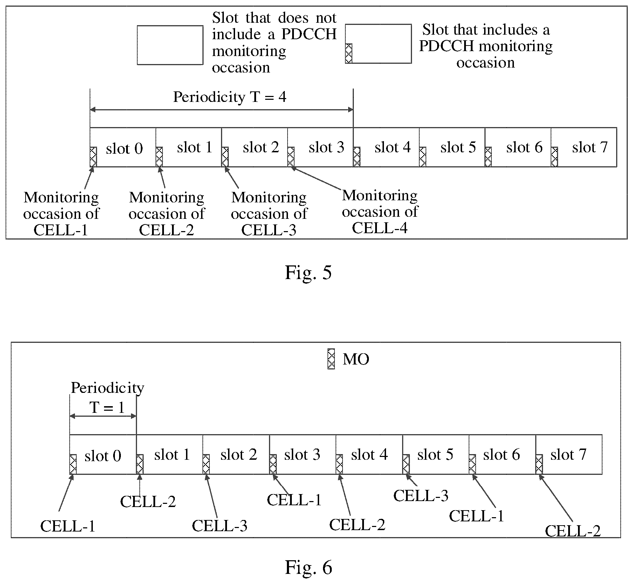

In this embodiment, in the configuration of the search space sets of the cells that participate in multi-cell scheduling, as shown in Fig. 5, periodicity values configured on a scheduling cell and a scheduled cell are the same, but offset values are different. The scheduled cell uses monitoringSymbolsWithinSlot of the scheduling cell. The cells use respective configured offset values. In this way, the objective that different scheduled cells perform PDCCH monitoring in different slots can be achieved.

In another embodiment provided in the present disclosure, in the second specific embodiment, the following method may be used for implementation:

When configuring a search space set used for multi-cell scheduling, the base station simultaneously indicates to count a corresponding monitoring occasion to a scheduling cell "specified by the base station" (i.e., the monitoring occasion is explicitly indicated). In an implementation, the monitoring occasion is allocated to scheduling cells in a polling manner according to a valid MO (or according to a specific time period). It is assumed that a configured MO periodicity is one slot, each slot has one MO. Cells that participate in multi-cell scheduling are CELL-1, CELL-2, and CELL-3, as shown in Fig. 6.

Base station side configuration:

For example, CELL-1, CELL-2, CELL-3, and CELL-4 participate in multi-carrier scheduling, and configured values of "monitoringSymbolsWithinSlot" of the search space set for multi-cell scheduling are as follows:

configuration parameters of CELL-1 (a scheduling cell/scheduled cell):

searchspace { monitoringSlotPeriodicity AndOffset periodicity = sl4, offset = 0 //selection range (0..3)
monitoringSymbolsWithinSlot = 1000000 0000000 //a monitoring occasion is in the first symbol of a slot;
dci-Formats-R18 ENUMERATED {formats0-X-And-1-X, formats0-X-And-1-X} //it indicates that configurations of a related search space set are related to multi-cell scheduling, formats0-X represents a format of DCI for multi-cell scheduling for scheduling uplink data, and formats1-X represents a format of DCI for multi-cell scheduling for scheduling downlink data,
 };

configuration parameters of CELL-2 (a scheduled cell):

searchspace { monitoringSymbolsWithinSlot = 0010000 0000000 //a monitoring occasion is in the third symbol of a slot}
dci-Formats-R18 ENUMERATED {formats0-X-And-1-X, formats0-X-And-1-X} //it indicates that configurations of a related search space set are related to multi-cell scheduling, formats0-X represents a format of DCI for multi-cell scheduling for scheduling uplink data, and formats1-X represents a format of DCI for multi-cell scheduling for scheduling downlink data;

configuration parameters of CELL-3 (a scheduled cell):

searchspace { monitoringSymbolsWithinSlot = 0000100 0000000 //a monitoring occasion is in the fifth symbol of a slot}
dci-Formats-R18 ENUMERATED {formats0-X-And-1-X, formats0-X-And-1-X} //it indicates that configurations of a related search space set are related to multi-cell scheduling, formats0-X represents a format of DCI for multi-cell scheduling for scheduling uplink data, and formats1-X represents a format of DCI for multi-cell scheduling for scheduling downlink data}; and

configuration parameters of CELL-4 (a scheduled cell):

searchspace { monitoringSymbolsWithinSlot = 0000000 1000000 //a monitoring occasion is in the eighth symbol of a slot}
dci-Formats-R18 ENUMERATED {formats0-X-And-1-X, formats0-X-And-1-X} //it indicates that configurations of a related search space set are related to multi-cell scheduling, formats0-X represents a format of DCI for multi-cell scheduling for scheduling uplink data, and formats1-X represents a format of DCI for multi-cell scheduling for scheduling downlink data}.

Actions performed on a terminal side:

On a scheduled cell, if a configured search space set is for multi-cell scheduling, the terminal considers that configured monitoringSymbolsWithinSlot is valid, and determines a PDCCH monitoring occasion and a monitoring load of the cell by using the parameter and nrofCandidates in combination with "other parameters of the search space set related to multi-cell scheduling configured on a scheduling cell". In other words, "monitoringSymbolsWithinSlot and nrofCandidates" configured on a scheduled cell are used in place of two parameters in "the search space set configured on the scheduling cell and related to scheduling" to determine a PDCCH monitoring occasion and a monitoring load of the scheduled cell.

In the configuration of the search space sets of the cells that participate in multi-cell scheduling, a scheduled cell is configured to use a periodicity value and an offset value configured on a scheduling cell and monitoringSymbolsWithinSlot configured on the scheduled cell. When positions of monitoring occasions configured on the cells in slots are different, the objective that different scheduled cells perform PDCCH monitoring in different slots can be achieved. In this way, repetitive monitoring on different scheduled cells can be avoided, thereby reducing power consumption of PDCCH monitoring by the terminal.

Further, in a same multi-cell scheduling set (a set of cells that can be scheduled by one piece of scheduling signaling), starting positions of PDCCHs configured by different UEs are different, i.e., it is ensured that monitoring occasions of different cells are in different time units (for example, a quantity of symbols of a CORESET).

Further, when the configuration of the search space set parameter leads to that different cells have an intersection in a same time unit (for example, a quantity of symbols of a CORESET), one of the cells is selected to perform PDCCH monitoring. A selection rule may be a cell with the smallest (or the largest index value). A scheduling cell. Alternatively, PDCCH monitoring is sequentially counted for different cells according to a specific order.

It needs to be noted that, in the configuration of a search space set corresponding to a scheduling cell, all parameters (for example, a CORESET, a searchspace ID, a periodicity & an offset of a monitoring occasion, and other parameters) required for the search space set need to be configured.

In the foregoing implementation method, a related protocol framework does not need to be modified, and no configuration information needs to be added, the work allocation of candidate PDCCH monitoring can be implemented by defining a parameter (monitoringSlotPeriodicity AndOffset or/and monitoringSymbolsWithinSlot) that is not defined or defined and considered invalid by the terminal in original protocols and considering the parameter valid.

In another embodiment provided in the present disclosure, CCE aggregation levels corresponding to different first cells are different.

A candidate PDCCH monitoring load is allocated to different cells through different aggregation levels L.

In a third specific embodiment of the present disclosure, in one slot, PDCCH monitoring is counted for a plurality of scheduled cells. In other words, an example in which candidate PDCCHs of monitoring of different scheduling cells are different is used for description. For example, for DCI for scheduling a plurality of cells, it is assumed that a total of 11 candidate PDCCHs need to be monitored and there are a total of four scheduled cells, and a corresponding quantity of candidate PDCCHs are allocated to each cell to perform monitoring.

In this embodiment, candidate PDCCHs are allocated to different scheduled cells through the dimension of different aggregation levels L. Fig. 1 shows corresponding quantities of candidate PDCCHs and aggregation levels configured by the base station for PDCCHs of multi-cell scheduling.

Table 1

| CCE aggregation level | Quantity of candidate PDCCHs | Configured for a corresponding scheduled cell |
| --- | --- | --- |
| 2 | 4 | CELL-1 |
| 4 | 4 | CELL-2 |
| 8 | 2 | CELL-3 |
| 16 | 1 | CELL-4 |

In Table 1, it is assumed that aggregation levels of corresponding candidate PDCCHs of DCI for multi-cell scheduling are 2, 4, 8, and 16, and quantities of candidate PDCCHs corresponding to the aggregation levels are respectively 4, 4, 2, and 1 (certainly, configurations may be the same or may be different, which is not limited herein). CELL-1 is a scheduling cell and is also a scheduled cell, and CELL-2, CELL-3, and CELL-4 are scheduled cells. Corresponding aggregation levels configured on different cells are different (each cell may include zero, one or more aggregation levels, which is not limited). In this way, the effect that different cells undertake corresponding candidate PDCCH monitoring is achieved.

Base station side configuration:

CELL-1, CELL-2, CELL-3, and CELL-4 participate in multi-carrier scheduling, and configured values of "aggregationLevel" of the search space set for multi-cell scheduling are as follows:

configuration parameter of CELL-1 (a scheduling cell/scheduled cell):
nrofCandidates SEQUENCE { aggregationLevel2 = n4 //selection range {n0, n1, n2, n3, n4, n5, n6, n8}};
configuration parameter of CELL-2 (a scheduled cell):
nrofCandidates SEQUENCE { aggregationLevel4 = n4 //selection range {n0, n1, n2, n3, n4, n5, n6, n8}};
configuration parameter of CELL-3 (a scheduled cell):
nrofCandidates SEQUENCE { aggregationLevel8 = n2 //selection range {n0, n1, n2, n3, n4, n5, n6, n8}}; and
configuration parameter of CELL-4 (a scheduled cell):
nrofCandidates SEQUENCE { aggregationLevel16=n1 //selectionrange {n0, n1, n2, n3, n4, n5, n6, n8}}.

Because the parameter configurations are configured by the base station, to achieve appropriate allocation of candidate PDCCH monitoring to different scheduled cells and also to reduce power consumption during PDCCH monitoring, the terminal does not expect values of aggregation levels of different cells to have an overlap when the base station configures aggregation levels of candidate PDCCHs, and at least does not expect the aggregation levels to be identical.

Actions performed on a terminal side:

On a scheduled cell, if a configured search space set is for multi-cell scheduling, the terminal considers that the parameter nrofCandidates is valid, and determines a PDCCH monitoring occasion and a monitoring load of the cell in combination with "other parameters of the search space set related to multi-cell scheduling configured on a scheduling cell". In other words, "nrofCandidatest" configured on a scheduled cell and the parameters in "the search space set configured on the scheduling cell and related to scheduling" are used to determine a PDCCH monitoring occasion and a monitoring load of the scheduled cell.

Further, in a same multi-cell scheduling set (a set of cells that can be scheduled by one piece of scheduling signaling), values of aggregation levels configured by different UEs are different, i.e., it is ensured that candidate PDCCHs of monitoring of different cells are different.

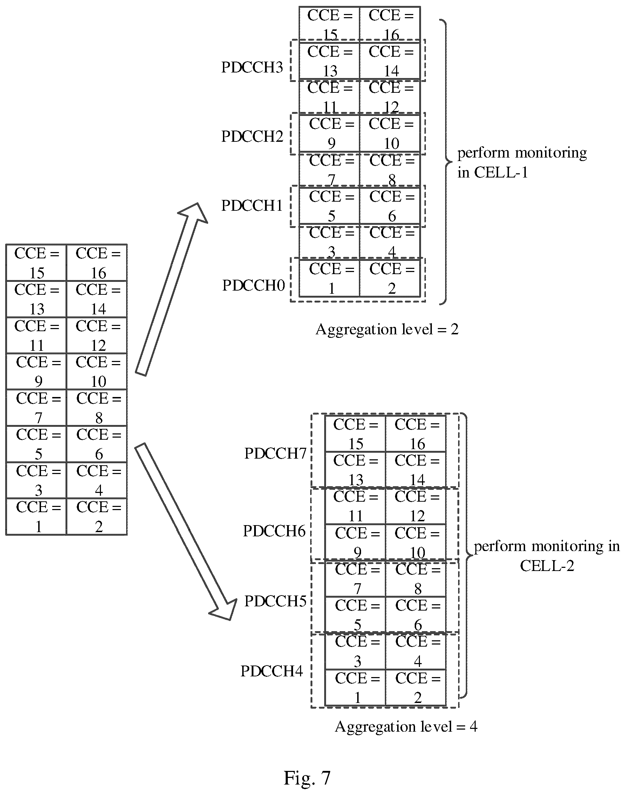

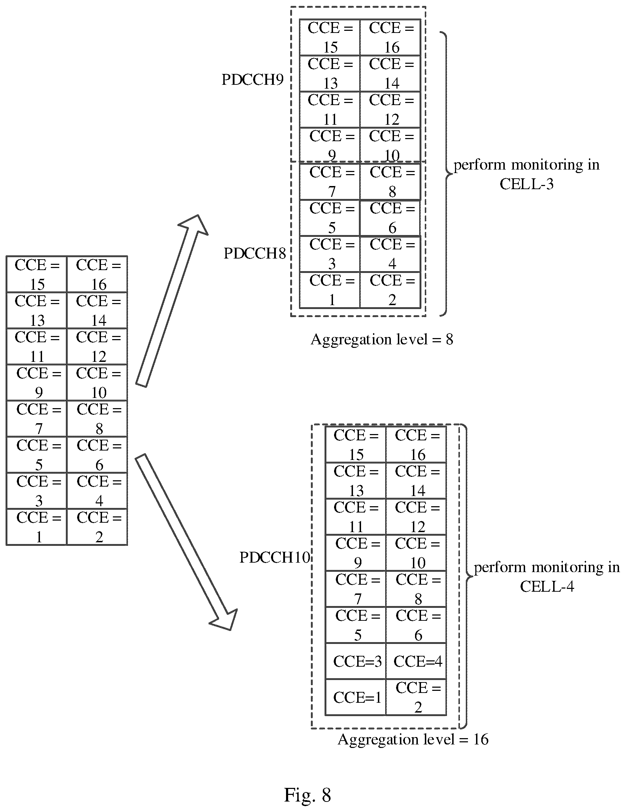

In the configuration of the search space sets of the cells that participate in multi-cell scheduling, different aggregation levels are configured for different cells. In this way, the objective that different scheduled cells perform monitoring in different candidate PDCCHs can be achieved. For details, refer to Fig. 7 and Fig. 8.

In another embodiment provided in the present disclosure, the determining the candidate PDCCH information corresponding to each first cell includes:

in a case that CCE aggregation levels corresponding to at least two first cells are the same, determining a candidate PDCCH corresponding to each first cell in the at least two first cells according to second indication information, where the second indication information includes: identifiers of candidate PDCCHs corresponding to the at least two first cells, or identifiers of CCEs occupied by candidate PDCCHs corresponding to the at least two first cells respectively.

In another embodiment provided in the present disclosure, in the second indication information, identifiers of candidate PDCCHs corresponding to different first cells are different, or, identifiers of CCEs occupied by candidate PDCCHs corresponding to different first cells are different.

In the embodiments of the present disclosure, that the identifiers of candidate PDCCHs corresponding to different first cells are different means that all PDCCH identifiers or some PDCCH identifiers corresponding to different first cells are different.

As an implementation of another embodiment provided in the present disclosure, identifiers of candidate PDCCHs corresponding to different first cells are different, offset information of a CCE index corresponding to each first cell is the same, and the offset information is used for determining a reference position of the candidate PDCCH.

As another implementation of another embodiment provided in the present disclosure, identifiers of CCEs occupied by candidate PDCCHs corresponding to different first cells are different, a CCE occupied by a candidate PDCCH corresponding to each first cell is determined according to a CCE occupied by a candidate PDCCH corresponding to a first cell preceding the each first cell according to a first sorting result, and the first sorting result is obtained by sorting the at least two first cells according to a preset order.

For example, the first sorting result is obtained by sorting the at least two first cells in ascending order of sequence numbers of cells. For a cell, an identifier of a CCE occupied by a candidate PDCCH corresponding to the cell is determined according to an index of the last CCE occupied by the last candidate PDCCH of a previous cell.

In a fourth specific embodiment of the present disclosure, when a same aggregation level L is configured for the scheduled cells, it is monitored whether CCEs included in candidate PDCCHs have an intersection.

Specifically, in one slot, PDCCH monitoring is counted for a plurality of cells. In other words, an example in which candidate PDCCHs of monitoring of different cells are different is used for description. For example, for DCI for scheduling a plurality of cells, it is assumed that a total of 16 candidate PDCCHs need to be monitored and there are a total of four scheduled cells, and four candidate PDCCHs are allocated to each cell to perform monitoring. In consideration of that DCI for multi-cell scheduling includes a relatively large amount of information, a higher CCE aggregation level (a candidate PDCCH includes a large number of radio resources) is required to ensure receiving performance. If only aggregation levels 4, 8, and 16 meet a requirement, in this case, if four cells participate in PDCCH monitoring, at least two cells use the same aggregation level L.

How to calculate CCEs corresponding to candidate PDCCHs of different cells when the same aggregation level L is configured for two cells is described below. The following two methods are specifically included:

Method A: For cells configured with the same aggregation level, starting positions of different candidate PDCCHs are configured (i.e., different candidate PDCCH identifiers are configured for different cells). For example, L = 4 is configured for both CELL-2 and CELL-3, and a total quantity of candidate PDCCHs is 4.

Candidate PDCCHs configured for CELL-2 are PDCCH-0 and PDCCH-1.

Candidate PDCCHs configured for CELL-3 are PDCCH-2 and PDCCH-3.

Method B: For cells configured with the same aggregation level, CCEs occupied by candidate PDCCHs are different. For example, L = 4 is configured for both CELL-2 and CELL-3, and a total quantity of candidate PDCCHs is 4. Two candidate PDCCHs are configured for CELL-2 and CELL-3.

The candidate PDCCHs configured for CELL-2 are PDCCH-0 with sequence numbers of occupied CCEs being 0, 1, 2, 3 and PDCCH-1 with sequence numbers of occupied CCEs being 4, 5, 6, and 7.

The candidate PDCCHs configured for CELL-3 are PDCCH-2 with sequence numbers of occupied CCEs being 8, 9, 10, 11 and PDCCH-3 with sequence numbers of occupied CCEs being 12, 13, 14, and 15.

An implementation process of the foregoing Method A is described below in detail.

Base station side parameter configuration:

In the candidate PDCCH parameter of the configured search space set, parameters of a starting candidate PDCCH are added, or in an order of cell sequence numbers, sequence numbers corresponding to candidate PDCCHs corresponding to scheduled cells are sequentially determined.

An example of adding parameters of a starting candidate PDCCH is as follows:

configuration parameters of CELL-2 (a scheduled cell):
nrofCandidates SEQUENCE { aggregationLevel4 = n2 //selection range {n0, n1, n2, n3, n4, n5, n6, n8 }
starCandidates =0 //a sequence number of a starting candidate PDCCH of CELL-2, correspondingly PDCCH-0 and PDCCH-1};
configuration parameters of CELL-3 (a scheduled cell):
nrofCandidates SEQUENCE { aggregationLevel4 = n2 //selection range {n0, n1, n2, n3, n4, n5, n6, n8 }
starCandidates =2 //a sequence number of a starting candidate PDCCH of CELL-2, correspondingly PDCCH-2 and PDCCH-3};
or, in an order of cell sequence numbers, starting sequence numbers of candidate PDCCHs of cells are determined, for example:

a configuration parameter of CELL-2 (a scheduled cell):
nrofCandidates SEQUENCE { aggregationLevel4 = n2 //selection range {n0, n1, n2, n3, n4, n5, n6, n8};
a configuration parameter of CELL-3 (a scheduled cell):
nrofCandidates SEQUENCE { aggregationLevel4 = n2 //selection range {n0, n1, n2, n3, n4, n5, n6, n8}.

Behavior performed on a terminal side:

the terminal may determine, according to the search space set parameter configured by the base station, that candidate PDCCHs with L = 4 are configured for both CELL-2 and CELL-3, and quantities of the candidate PDCCHs are both 2; and
the terminal may determine, according to the parameter starCandidates or a cell index order, that:

sequence numbers of the candidate PDCCHs corresponding to CELL-2 are 0 and 1; and
sequence numbers of the candidate PDCCHs corresponding to CELL-3 are 2 and 3.

For an aggregation level of L, for a candidate PDCCH with a sequence number being $m_{s,n_{CI}}^{(L)}$, a CCE occupied by the candidate PDCCH may be calculated by using the following formula.

$$L \bullet \left\{ \left( Y_{p,n_{s,f}^{\mu}} + \left\lfloor \frac{m_{s,n_{CI}}^{(L)} \bullet N_{CCE,P}}{L \bullet M_{s,\,max}^{(L)}} \right\rfloor + n_{CI\_offset} \right) \mathrm{mod} \left\lfloor N_{CCE,P} / L \right\rfloor \right\} + i$$

For a CSS, $Y_{p,n_{s,f}^{\mu}}$ is 0. For a USS, $Y_{p,n_{s,f}^{\mu}} = \left( A_p \cdot Y_{p,n_{s,f}^{\mu}-1} \right) \mathrm{mod}\,D$, $Y_{p,-1} = n_{RNTI} \neq 0$, $A_p = 39827$ (when pmod3 = 0), $A_p = 39829$ (when pmod3 = 1), and $A_p = 39839$ (when pmod3 = 2). In addition, the parameter D = 65537; and n*RNTI* is a UE identity (C-RNTI) assigned to UE. i = 0, ..., and L-1; $N_{CCE,P}$ is a quantity of CCEs of a CORESET p, and a value ranges from 0 to $N_{CCE,P}$-1; p is a sequence number of the CORESET, L represents an aggregation level, $n_{CI}$ is carrier indicator field information configured for the UE during cross-carrier scheduling, $n_{CI\_offset}$ represents offset information of a carrier indicator field (offset information of a CCE index), and for all cells that participate in PDCCH monitoring, $n_{CI\_offset}$ is the same, for example, $n_{CI\_offset} = 0$, or certainly may be another value. $m_{s,n_{CI}}^{(L)} = 0, \ldots, m_{s,n_{CI}}^{(L)} - 1$,

and for multi-cell scheduling, $m_{s,n_{CI}}^{(L)}$ is a sum of quantities of candidate PDCCHs configured for a plurality of cells. For example, when L = 4 is configured for CELL-2, a quantity of candidate PDCCHs is 2. When L = 4 is configured for CELL-3, a quantity of candidate PDCCHs is 2. For other cells, when L = 4, quantities of candidate PDCCHs are all 0.

$$M_{s,n_{CI}}^{(L=4)} = 2 + 2 = 4.$$

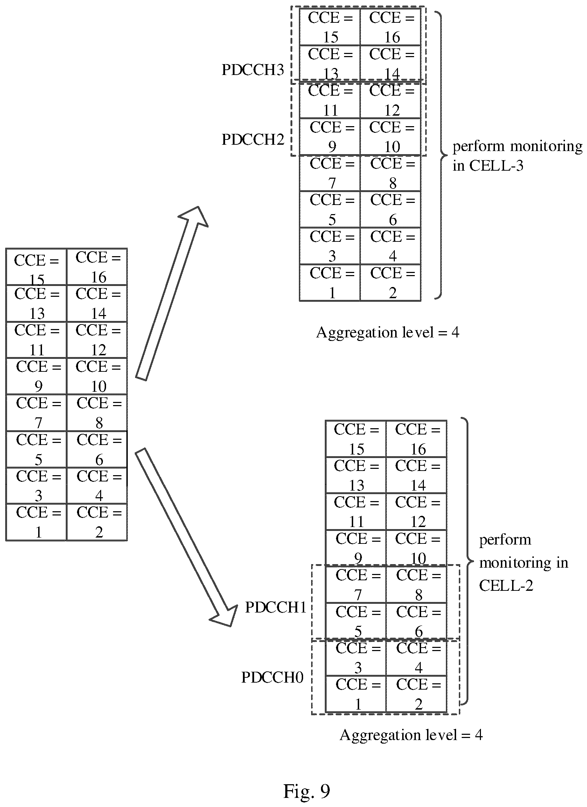

In the foregoing example, for CELL-2, sequence numbers of two candidate PDCCHs are $m_{s,n_{CI}}^{(L=4)} = 0, 1$, and for CELL-3, sequence numbers of two candidate PDCCHs are $m_{s,n_{CI}}^{(L=4)} = 2, 3$. Fig. 9 shows candidate PDCCHs and occupied CCEs corresponding to CELL-2 and CELL-3.

An implementation process of the foregoing Method B is described below in detail.

Base station side parameter configuration:

Configuration 1: Candidate PDCCH parameters of search space sets for multi-cell scheduling of different cells are configured.

It is assumed that configured candidate PDCCH parameters of the cell 2 and the cell 3 are as follows:

a configuration parameter of CELL-2 (a scheduled cell):
nrofCandidates SEQUENCE { aggregationLevel4 = n2 //selection range {n0, n1, n2, n3, n4, n5, n6, n8}; and
a configuration parameter of CELL-3 (a scheduled cell):
nrofCandidates SEQUENCE { aggregationLevel4 = n2 //selection range {n0, n1, n2, n3, n4, n5, n6, n8}.

Configuration 2: In a set of cells configured with multi-cell scheduling, a sequence number corresponding to each cell is cell_cn. Sets of cells of uplink scheduling and downlink scheduling may be the same or may be different. Correspondingly, sequence numbers corresponding to the cells of uplink scheduling and downlink scheduling may be the same or may be different.

Behavior on a terminal side:

CCEs occupied by each candidate PDCCH corresponding to a cell are determined according to the parameter nrofCandidates and cell-n configured by the base station.

The method is as follows:

A method for calculating CCEs when a sequence number of a candidate PDCCH is $m_{s,\text{cell}-n}^{(L)}$ for an aggregation level of L is provided below:

$$L \cdot \left\{ \left( Y_{p,n_{s,f}^\mu} + \left\lceil \frac{m_{s,\text{cell}-n}^{(L)} \cdot N_{CCE,p}}{L \cdot M_{s,\max}^{(L)}} \right\rceil + n_{CI} \right) \bmod \lfloor N_{CCE,p}/L \rfloor \right\} +$$

$$\text{lastAllocatedCCEIndex} + i.$$

For a CSS, $Y_{p,n_{s,f}^\mu}$ is 0. For a USS, $Y_{p,n_{s,f}^\mu} = \left( A_p \cdot Y_{p,n_{s,f}^\mu - 1} \right) \bmod D$, $Y_{p,-1} = n_{RNTI} \neq 0$, $A_p = 39827$ (when p mod 3 = 0), $A_p = 39829$ (when p mod 3 = 1), $A_p = 39839$ (when p mod 3 = 2). In addition, the parameter D = 65537; and $n_{RNTI}$ is a UE identity (C-RNTI) assigned to UE. i = 0, ..., and L-1; $N_{CCE,P}$ is a quantity of CCEs of a CORESET p, and a value ranges from 0 to $N_{CCE,P}$ -1 ; and L represents an aggregation level, and $n_{CI}$ is carrier indicator field information configured for the UE during cross-carrier scheduling. For multi-carrier scheduling, $n_{CI}$ is replaced with $n_{CI\_offset}$, which represents offset information of a carrier indicator field (offset information of a CCE index), and for all cells that participate in PDCCH monitoring, $n_{CI\_offset}$ is the same, for example, $n_{CI\_offset}$ = 0, or certainly may be another value. $m_{s,\text{cell}-n}^{(L)} = 0, \cdots, M_{s,\text{cell}-n}^{(L)} - 1$, and for multi-cell scheduling, $M_{s,\text{cell}-n}^{(L)}$ is a quantity of candidate PDCCHs when an aggregation level is L for a current configured cell. For example, when L = 4 is configured for CELL-2, a quantity of candidate PDCCHs is 2. When L = 4 is configured for CELL-3, $M_{s,\text{cell}-n}^{(L=4)} = 2 + 2 = 4$.

lastAllocatedCCEIndex is an index of the last CCE (a CCE with the largest sequence number) occupied by the last candidate PDCCH (a candidate PDCCH with the largest candidate PDCCH identifier) allocated by a previous cell (in an order of sequence numbers cell-n of cells in a multi-cell scheduling set) in multi-cell scheduling; and for the first cell (cell-n has the smallest value), lastAllocatedCCEIndex = 0.

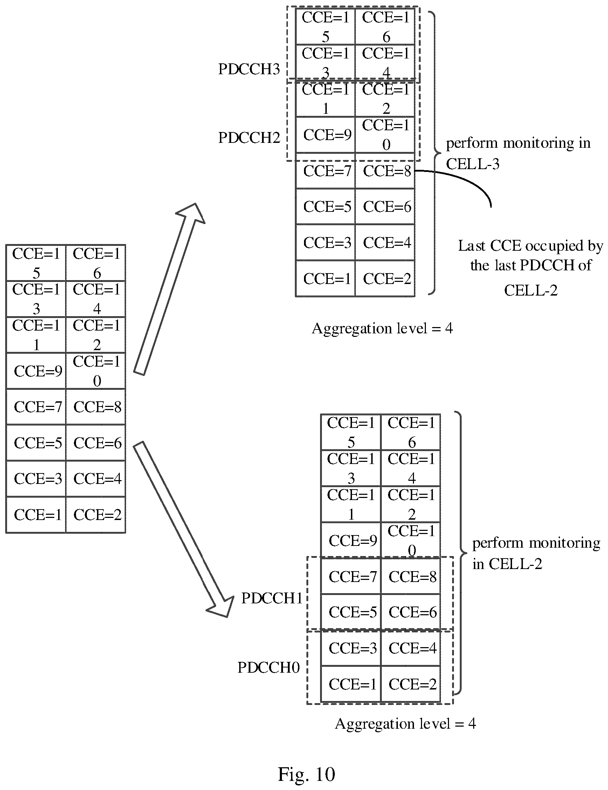

As shown in the foregoing example, for CELL-2, sequence numbers of two candidate PDCCHs are $m_{,\text{cell}-n}^{(L=4)} = 0, 1$; and for CELL-3, sequence numbers of two candidate PDCCHs are $m_{\text{cell}-n}^{(L=4)} = 0, 1$. Fig. 10 is an effect diagram of candidate PDCCHs and occupied CCEs corresponding to CELL-2 and CELL-3.

Further, a modulo operation $\lfloor N_{CCE,p}/L \rfloor$ is performed after lastAllocatedCCEIndex increases to ensure that a boundary range is not exceeded during calculation of a starting CCE of a candidate PDCCH. Details are as follows:

$$(AA + \text{lastAllocatedCCEIndex}) \bmod \lfloor N_{CCE,p}/L \rfloor + i;$$

and

$$AA = L \cdot \left\{ \left( Y_{p,n_{s,f}^\mu} + \left\lceil \frac{m_{s,n_{CI}}^{(L)} \cdot N_{CCE,p}}{L \cdot M_{s,\max}^{(L)}} \right\rceil + n_{CI} \right) \bmod \lfloor N_{CCE,p}/L \rfloor \right\}.$$

It needs to be noted that cell-n in this embodiment may be an ID of a serving cell configured by the base station, or may be an ID of an index used for configuration of multi-carrier scheduling. This is not limited herein.

In addition, for a scheduling cell, when different scheduling sets are supported (for example, for a set 1: a plurality of cells scheduled by one piece of DCI are CELL-1, CELL-2, and CELL-3; and for a set 2: a plurality of cells scheduled by one piece of DCI are CELL-4, CELL-5, and CELL-2), the base station configures different search space sets (for example, SS_set1 and SS_set2) for different scheduling sets. For a scheduled cell, during configuration of a search space set, an information element indication (for example, a search space set ID correlated with multi-cell scheduling) needs to be added to indicate a correlated search space set (i.e., correlated with SS_set1 or SS_set2) configured on a scheduling cell.

In a scheduling set, if the configuration of a search space set of the base station leads to repetitive monitoring of one same candidate PDCCH by two or more cells, the candidate PDCCH is counted for only one of the cells. The method is as follows:

It is assumed that a cell is m and has candidate PDCCH-x, a cell is n and has candidate PDCCH-y, candidate PDCCH-x and candidate PDCCH-y are the same (for example, use the same aggregation level, occupy the same CCE, and have the same length of monitored DCI), and candidate PDCCH-y is already counted for the cell n. For the cell m, candidate PDCCH-x is no longer monitored, i.e., candidate PDCCH-x is not counted for the cell m.

Through the method in the embodiments of the present disclosure, a workload of candidate PDCCH monitoring can be flexibly configured to one or more cells, i.e., a load of candidate PDCCH monitoring of multi-cell scheduling can be configured to a scheduling cell, a scheduled cell, or a plurality of scheduled cells, to achieve the objectives of flexible configuration and flexible scheduling.

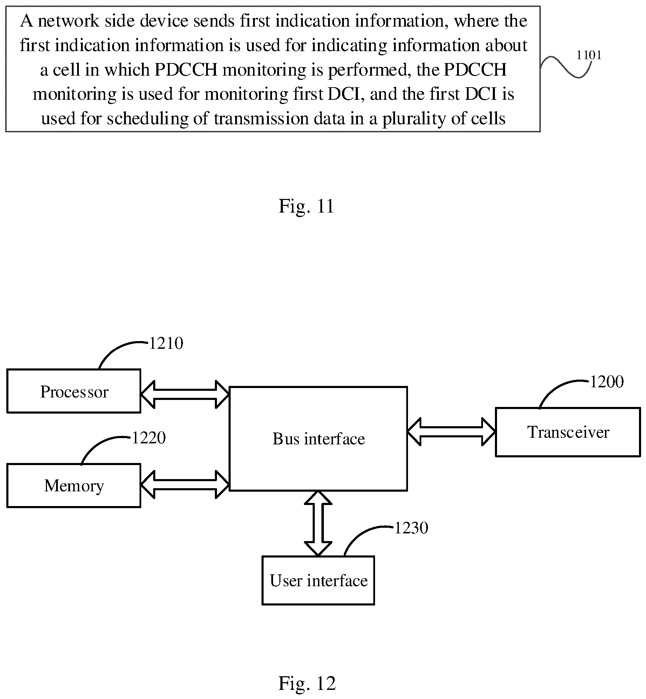

As shown in Fig. 11, the present disclosure further provides in some embodiments a PDCCH monitoring method, including the following steps.

A step 1101 includes: sending, by a network side device, first indication information, where the first indication information is used for indicating information about a cell in which PDCCH monitoring is performed, the PDCCH monitoring is used for monitoring first DCI, and the first DCI is used for scheduling of transmission data in a plurality of cells.

In another embodiment provided in the present disclosure, the first indication information includes a search space set parameter of the cell.

In another embodiment provided in the present disclosure, in a case that a quantity of candidate PDCCHs of at least one aggregation level in the search space set parameter is greater than 0, the first indication information is used for indicating that the cell corresponding to the search space set parameter is the cell in which the PDCCH monitoring is performed.

In another embodiment provided in the present disclosure, the search space set parameter includes a CCE aggregation level, CCEs corresponding to different first cells have different aggregation levels, and the first cell is the cell in which the PDCCH monitoring is performed.

In another embodiment provided in the present disclosure, the search space set parameter includes a CCE aggregation level; and the method further includes:

in a case that CCE aggregation levels corresponding to at least two first cells are the same, sending second indication information,
where the second indication information includes identifiers of candidate PDCCHs corresponding to the at least two first cells, or includes identifiers of CCEs occupied by candidate PDCCHs corresponding to the at least two first cells respectively.

In another embodiment provided in the present disclosure, identifiers of candidate PDCCHs corresponding to different first cells are different, offset information of a CCE index corresponding to each first cell is the same, and the offset information is used for determining a reference position of the candidate PDCCH.

In another embodiment provided in the present disclosure, identifiers of CCEs occupied by candidate PDCCHs corresponding to different first cells are different, a CCE occupied by a candidate PDCCH corresponding to each first cell is determined according to a CCE occupied by a candidate PDCCH corresponding to a first cell preceding the each first cell according to a first sorting result, and the first sorting result is obtained by sorting the at least two first cells according to a preset order.

It needs to be noted that the PDCCH monitoring method performed by the network side device is a method corresponding to the PDCCH monitoring method performed by the terminal. Details are not described herein again.

In the embodiments of the present disclosure, a network side device sends first indication information, where the first indication information is used for indicating information about a cell in which PDCCH monitoring is performed, the PDCCH monitoring is used for monitoring first DCI, and the first DCI is used for scheduling of transmission data in a plurality of cells. A terminal determines, according to the first indication information, the at least one first cell in which the PDCCH monitoring is performed, and performs the PDCCH monitoring based on the at least one first cells, thereby achieving the objective of performing PDCCH monitoring when the terminal is configured with DCI used for scheduling of transmission data in a plurality of cells.

As shown in Fig. 12, the present disclosure provides in some embodiments a PDCCH monitoring apparatus, applied to a terminal, including a memory 1220, a transceiver 1200, and a processor 1210.

The memory 1220 is configured to store a computer program; the transceiver 1200 is configured to send and receive data under the control of the processor; and the processor 1210 is configured to read the computer program in the memory 1220 and perform the following operations:

determining at least one first cell in which PDCCH monitoring is performed, where the PDCCH monitoring is used for monitoring first DCI, and the first DCI is used for scheduling of transmission data in a plurality of cells; and performing the PDCCH monitoring according to the at least one first cell.

In Fig. 12, a bus architecture may include any quantity of interconnected buses and bridges. Specifically, various circuits such as one or more processors represented by the processor 1210 and a storage represented by the memory 1220 are linked together. The bus architecture may also link various other circuits such as peripherals, voltage regulators, and power management circuits, which are well known in the art, and therefore are not further described herein. The bus interface provides an interface. The transceiver 1200 may include a plurality of elements, that is, a transmitter and a receiver, to provide units for communicating with various other apparatuses over transmission media. These transmission media include a wireless channel, a wired channel, an optical fiber, and other transmission media. For different user devices, the user interface 1230 may be an interface capable of externally/internally connecting desired devices, including, but not limited to, a keypad, a display, a speaker, a microphone, and a joystick.

The processor 1210 is responsible for managing the bus architecture and general processing. The memory 1220 can store data used by the processor 1210 while performing operations.

Optionally, the processor 1210 may be a central processing unit (CPU), an application-specific integrated circuit (ASIC), a field-programmable gate array (FPGA) or a complex programmable logic device (CPLD). The processor may also use a multi-core architecture.

The processor invokes the computer program stored in the memory to perform, according to obtained executable instructions, any method provided in the embodiments of the present disclosure. The processor and the memory may be physically separate.

In another embodiment provided in the present disclosure, the processor, when executing the program, further implements the following steps:

obtaining first indication information through the transceiver, where the first indication information is used for indicating information about a cell in which the PDCCH monitoring is performed; and determining, according to the first indication information, the at least one first cell in which the PDCCH monitoring is performed.

In another embodiment provided in the present disclosure, the first indication information includes a search space set parameter of the cell.

In another embodiment provided in the present disclosure, the processor, when executing the program, further implements the following step:

in a case that a quantity of candidate PDCCHs of at least one aggregation level included in the search space set parameter is greater than 0, determining the cell corresponding to the search space set parameter as the first cell.

In another embodiment provided in the present disclosure, the processor, when executing the program, further implements the following steps:

determining a PDCCH monitoring occasion and candidate PDCCH information corresponding to each first cell, where the candidate PDCCH information includes a CCE aggregation level and a quantity of candidate PDCCHs corresponding to the CCE aggregation level; and performing the PDCCH monitoring according to the PDCCH monitoring occasion and the candidate PDCCH information corresponding to each first cell.

In another embodiment provided in the present disclosure, the processor, when executing the program, further implements the following step:

in a case that the first cell is a scheduling cell, determining a PDCCH monitoring occasion and candidate PDCCH information corresponding to the scheduling cell according to a search space set parameter of the scheduling cell; in a case that the first cell is a scheduled cell, determining a PDCCH monitoring occasion and candidate PDCCH information corresponding to the scheduled cell according to a search space set parameter of a scheduling cell and a search space set parameter of the scheduled cell.

In another embodiment provided in the present disclosure, the processor, when executing the program, further implements the following steps:

in a case that at least two first cells have an overlapping PDCCH monitoring occasion, selecting one first cell from the at least two first cells according to a first selection mode; and
determining the overlapping PDCCH monitoring occasion as a PDCCH monitoring occasion corresponding to the selected first cell,
where the first selection mode includes: one or more of selecting a cell with the largest or smallest cell index value, selecting a scheduling cell, and presetting a selection order.

In another embodiment provided in the present disclosure, CCE aggregation levels corresponding to different first cells are different.
In another embodiment provided in the present disclosure, the processor, when executing the program, further implements the following step:

in a case that CCE aggregation levels corresponding to at least two first cells are the same, determining a candidate PDCCH corresponding to each first cell in the at least two first cells according to second indication information,
where the second indication information includes: identifiers of candidate PDCCHs corresponding to the at least two first cells, or identifiers of CCEs occupied by candidate PDCCHs corresponding to the at least two first cells respectively.

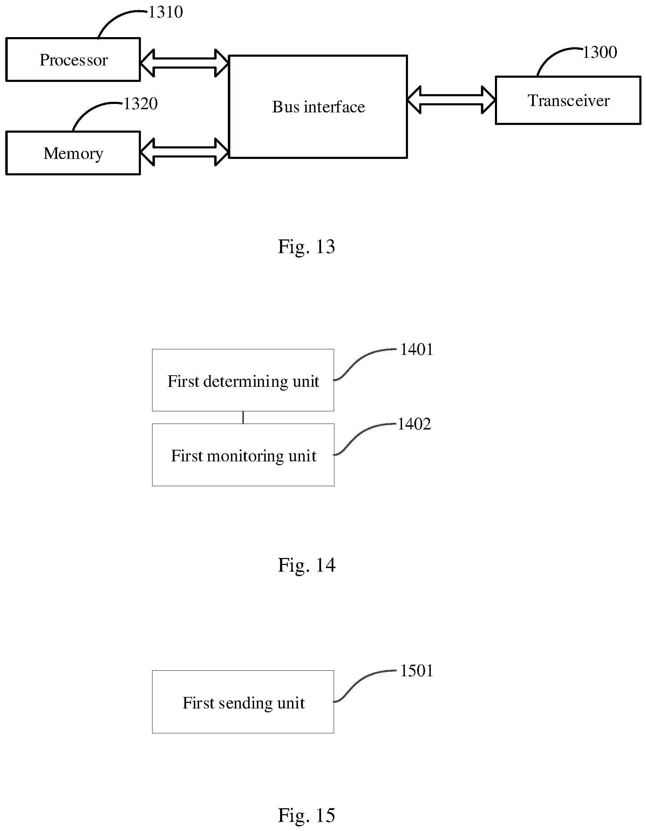

In another embodiment provided in the present disclosure, identifiers of candidate PDCCHs corresponding to different first cells are different, offset information of a CCE index corresponding to each first cell is the same, and the offset information is used for determining a reference position of the candidate PDCCH.
In another embodiment provided in the present disclosure, identifiers of CCEs occupied by candidate PDCCHs corresponding to different first cells are different, a CCE occupied by a candidate PDCCH corresponding to each first cell is determined according to a CCE occupied by a candidate PDCCH corresponding to a first cell preceding the each first cell according to a first sorting result, and the first sorting result is obtained by sorting the at least two first cells according to a preset order.
It needs to be noted that the foregoing apparatus provided in the embodiments of the present invention can implement all method steps implemented by the embodiment of the PDCCH monitoring method applied to a terminal, and can achieve the same technical effects. The parts and beneficial effects in this embodiment that are the same as those in the method embodiments are not described herein in detail again.
As shown in Fig. 13, the present disclosure provides in some embodiments a PDCCH monitoring apparatus, applied to a network side device, including a memory 1320, a transceiver 1300, and a processor 1310.
The memory 1320 is configured to store a computer program; the transceiver 1300 is configured to send and receive data under the control of the processor; and the processor 1310 is configured to read the computer program in the memory and perform the following operations:
sending first indication information through the transceiver 1300, where the first indication information is used for indicating information about a cell in which PDCCH monitoring is performed, the PDCCH monitoring is used for monitoring first DCI, and the first DCI is used for scheduling of transmission data in a plurality of cells.
In another embodiment provided in the present disclosure, the first indication information includes a search space set parameter of the cell.
In another embodiment provided in the present disclosure, in a case that a quantity of candidate PDCCHs of at least one aggregation level in the search space set parameter is greater than 0, the first indication information is used for indicating that the cell corresponding to the search space set parameter is the cell in which the PDCCH monitoring is performed.
In another embodiment provided in the present disclosure, the search space set parameter includes a CCE aggregation level, CCEs corresponding to different first cells have different aggregation levels, and the first cell is the cell in which the PDCCH monitoring is performed.
In another embodiment provided in the present disclosure, the search space set parameter includes a CCE aggregation level; and the processor, when executing the program, further implements the following step:

in a case that CCE aggregation levels corresponding to at least two first cells are the same, sending second indication information through the transceiver,
where the second indication information includes identifiers of candidate PDCCHs corresponding to the at least two first cells, or includes identifiers of CCEs occupied by candidate PDCCHs corresponding to the at least two first cells respectively.

In another embodiment provided in the present disclosure, identifiers of candidate PDCCHs corresponding to different first cells are different, offset information of a CCE index corresponding to each first cell is the same, and the offset information is used for determining a reference position of the candidate PDCCH.

In another embodiment provided in the present disclosure, identifiers of CCEs occupied by candidate PDCCHs corresponding to different first cells are different, a CCE occupied by a candidate PDCCH corresponding to each first cell is determined according to a CCE occupied by a candidate PDCCH corresponding to a first cell preceding the each first cell according to a first sorting result, and the first sorting result is obtained by sorting the at least two first cells according to a preset order.

In Fig. 13, a bus architecture may include any quantity of interconnected buses and bridges. Specifically, various circuits such as one or more processors represented by the processor 1310 and a storage represented by the storage 1320 are linked together. The bus architecture may also link various other circuits such as peripherals, voltage regulators, and power management circuits, which are well known in the art, and therefore are not further described herein. The bus interface provides an interface. The transceiver 1300 may include a plurality of elements, that is, a transmitter and a receiver, to provide units for communicating with various other apparatuses over transmission media. These transmission media include a wireless channel, a wired channel, an optical fiber, and other transmission media. The processor 1310 is responsible for managing the bus architecture and general processing. The storage 1320 can store data used by the processor 1310 while performing operations.

The processor 1310 may be a CPU, an ASIC, an FPGA or a CPLD. The processor may also use a multi-core architecture.

It needs to be noted that the foregoing apparatus provided in the embodiments of the present invention can implement all method steps implemented by the embodiment of the PDCCH monitoring method applied to a network side device, and can achieve the same technical effects. The parts and beneficial effects in this embodiment that are the same as those in the method embodiments are not described herein in detail again.

As shown in Fig. 14, the present disclosure further provides in some embodiments a PDCCH monitoring apparatus, applied to a terminal, including:

a first determining unit 1401, configured to determine at least one first cell in which PDCCH monitoring is performed, where the PDCCH monitoring is used for monitoring first DCI, and the first DCI is used for scheduling of transmission data in a plurality of cells; and
a first monitoring unit 1402, configured to perform the PDCCH monitoring according to the at least one first cell.

In another embodiment provided in the present disclosure, the apparatus in the embodiments of the present disclosure further includes:

a first obtaining unit, configured to obtain first indication information, where the first indication information is used for indicating information about a cell in which the PDCCH monitoring is performed, where
the first determining unit is configured to determine, according to the first indication information, the at least one first cell in which the PDCCH monitoring is performed.

In another embodiment provided in the present disclosure, the first indication information includes a search space set parameter of the cell.

In another embodiment provided in the present disclosure, the first determining unit is configured to: in a case that a quantity of candidate PDCCHs of at least one aggregation level included in the search space set parameter is greater than 0, determine the cell corresponding to the search space set parameter as the first cell.

In another embodiment provided in the present disclosure, the apparatus in the embodiments of the present disclosure further includes:

a second determining unit, configured to determine a PDCCH monitoring occasion and candidate PDCCH information corresponding to each first cell, where the candidate PDCCH information includes a CCE aggregation level and a quantity of candidate PDCCHs corresponding to the CCE aggregation level.

In another embodiment provided in the present disclosure, the first monitoring unit is configured to perform the PDCCH monitoring according to the PDCCH monitoring occasion and the candidate PDCCH information corresponding to each first cell.

In another embodiment provided in the present disclosure, the second determining unit is configured to:

in a case that the first cell is a scheduling cell, determine a PDCCH monitoring occasion and candidate PDCCH information corresponding to the scheduling cell according to a search space set parameter of the scheduling cell; and/or, in a case that the first cell is a scheduled cell, determine a PDCCH monitoring occasion and candidate PDCCH information corresponding to the scheduled cell according to a search space set parameter of a scheduling cell and a search space set parameter of the scheduled cell.

In another embodiment provided in the present disclosure, the second determining unit includes:

a first selection subunit, configured to: in a case that at least two first cells have an overlapping PDCCH monitoring occasion, select one first cell from the at least two first cells according to a first selection mode; and

a first determining subunit, configured to determine the overlapping PDCCH monitoring occasion as a PDCCH monitoring occasion corresponding to the selected first cell,

where the first selection mode includes: one or more of selecting a cell with the largest or smallest cell index value, selecting a scheduling cell, and presetting a selection order.

In another embodiment provided in the present disclosure, CCE aggregation levels corresponding to different first cells are different.

In another embodiment provided in the present disclosure, the determining unit is configured to: in a case that CCE aggregation levels corresponding to at least two first cells are the same, determine a candidate PDCCH corresponding to each first cell in the at least two first cells according to second indication information,

where the second indication information includes: identifiers of candidate PDCCHs corresponding to the at least two first cells, or identifiers of CCEs occupied by candidate PDCCHs corresponding to the at least two first cells respectively.

In another embodiment provided in the present disclosure, identifiers of candidate PDCCHs corresponding to different first cells are different, offset information of a CCE index corresponding to each first cell is the same, and the offset information is used for determining a reference position of the candidate PDCCH.

In another embodiment provided in the present disclosure, identifiers of CCEs occupied by candidate PDCCHs corresponding to different first cells are different, a CCE occupied by a candidate PDCCH corresponding to each first cell is determined according to a CCE occupied by a candidate PDCCH corresponding to a first cell preceding the each first cell according to a first sorting result, and the first sorting result is obtained by sorting the at least two first cells according to a preset order.

It needs to be noted that the foregoing apparatus provided in the embodiments of the present invention can implement all method steps implemented by the embodiment of the PDCCH monitoring method applied to a terminal, and can achieve the same technical effects. The parts and beneficial effects in this embodiment that are the same as those in the method embodiments are not described herein in detail again.

As shown in Fig. 15, the present disclosure further provides in some embodiments a PDCCH monitoring apparatus, applied to a network side device, including:

a first sending unit 1501, configured to send first indication information, where the first indication information is used for indicating information about a cell in which PDCCH monitoring is performed, the PDCCH monitoring is used for monitoring first DCI, and the first DCI is used for scheduling of transmission data in a plurality of cells.

In another embodiment provided in the present disclosure, the first indication information includes a search space set parameter of the cell.

In another embodiment provided in the present disclosure, in a case that a quantity of candidate PDCCHs of at least one aggregation level in the search space set parameter is greater than 0, the first indication information is used for indicating that the cell corresponding to the search space set parameter is the cell in which the PDCCH monitoring is performed.

In another embodiment provided in the present disclosure, the search space set parameter includes a CCE aggregation level, CCEs corresponding to different first cells have different aggregation levels, and the first cell is the cell in which the PDCCH monitoring is performed.

In another embodiment provided in the present disclosure, the search space set parameter includes a CCE aggregation level; and the apparatus further includes:

a second sending unit, configured to: in a case that CCE aggregation levels corresponding to at least two first cells are the same, send second indication information,

where the second indication information includes identifiers of candidate PDCCHs corresponding to the at least two first cells, or includes identifiers of CCEs occupied by candidate PDCCHs corresponding to the at least two first cells respectively.

In another embodiment provided in the present disclosure, identifiers of candidate PDCCHs corresponding to different first cells are different, offset information of a CCE index corresponding to each first cell is the same, and the offset information is used for determining a reference position of the candidate PDCCH.

In another embodiment provided in the present disclosure, identifiers of CCEs occupied by candidate PDCCHs corresponding to different first cells are different, a CCE occupied by a candidate PDCCH corresponding to each first cell is determined according to a CCE occupied by a candidate PDCCH corresponding to a first cell preceding the each first cell according to a first sorting result, and the first sorting result is obtained by sorting the at least two first cells according to a preset order.

It needs to be noted that the foregoing apparatus provided in the embodiments of the present invention can implement all method steps implemented by the embodiment of the PDCCH monitoring method applied to a network side device, and can achieve the same technical effects. The parts and beneficial effects in this embodiment that are the same as those in the method embodiments are not described herein in detail again.

It needs to be noted that, in embodiments of the present disclosure, division into the units is an example, and is merely logical function division. During actual implementation, another division manner may be used. In addition, functional units in the embodiments of the present disclosure may be integrated into one processing unit, or each of the units may exist alone physically, or two or more units are integrated into one unit. The integrated unit may be implemented in the form of hardware or a software functional unit.

When the integrated unit is implemented in a form of a software function unit and sold or used as an independent product, the integrated unit may be stored in a processor-readable storage medium. Based on such an understanding, the technical solutions of the present disclosure essentially, or the part contributing to the related art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods in embodiments of the present disclosure. The foregoing storage medium includes: any medium that can store program code, such as a USB flash drive, a removable hard disk, a read-only memory (ROM), a random access memory (RAM), a magnetic disk, or an optical disc.

The present disclosure further provides in some embodiments a processor-readable storage medium, where the processor-readable storage medium stores program instructions, and the program instructions are used for enabling a processor to perform and implement the following step:

determining at least one first cell in which PDCCH monitoring is performed, where the PDCCH monitoring is used for monitoring first DCI, and the first DCI is used for scheduling of transmission data in a plurality of cells; and performing the PDCCH monitoring according to the at least one first cell,
or the program instructions are used for enabling a processor to perform and implement the following step:
sending first indication information, where the first indication information is used for indicating information about a cell in which PDCCH monitoring is performed, the PDCCH monitoring is used for monitoring first DCI, and the first DCI is used for scheduling of transmission data in a plurality of cells.

A terminal device in the embodiments of the present disclosure may be a device that provides a user with voice and/or data connectivity, a handheld device having a wireless connection function, another processing device connected to a wireless modem, or the like. In different systems, the terminal device may have different names. For example, in a 5GS, the terminal device may be referred to as UE. The wireless terminal device may communicate with one or more CNs through a radio access network (RAN). The wireless terminal device may be a mobile terminal device, for example, a mobile phone (or referred to as a "cellular" phone) or a computer equipped with a mobile terminal device, for example, may be a portable, pocket-sized, handheld, computer built-in or in-vehicle mobile apparatus, which exchanges voice and/or data with the RAN. For example, the wireless terminal may be a device such as a personal communication service (PCS) phone, a cordless phone set, a Session Initiation Protocol (SIP) phone, a wireless local loop (WLL) station or a PDA. The wireless terminal device may also be referred to as a system, a subscriber unit, a subscriber station, a mobile station, a mobile, a remote station, an access point, a remote terminal, an access terminal, a user terminal, a user agent, a user device. This is not limited in the embodiments of the present disclosure.

The network device (i.e., the foregoing network side device) in the embodiments of the present disclosure may be a base station. The base station may include a plurality of cells that provide a service a terminal. According to different specific application scenarios, the base station may also be referred to as an access point, or may be a device that communicates with the wireless terminal device through one or more sectors on an air interface in an access network, or may have another name. The network device may be configured to interchange a received over-the-air frame with an Internet Protocol (IP) packet and used as a router between the wireless terminal device and the remaining part of the access network. The remaining part of the access network may include an IP communication network. The network device may further coordinate attribute management of the air interface. For example, the network device in the embodiments of the present disclosure may be a BTS in a GSM or CDMA, or may be a network device (a NodeB) in WCDMA, or may be an eNB in LTE or a 5G base station (gNB) in a 5G network architecture (next generation system), or may be a HeNB, a relay node, a femto base station, a pico base station, or the like. This is not limited in the embodiments of the present disclosure.

In some network structures, the network device may include a centralized unit (CU) node and a distributed unit (DU) node. The CU and the DU may also be geographically separate.

The network device and the terminal device may respectively use one or more antennas to perform Multi Input Multi Output (MIMO) transmission. The MIMO transmission may be a single user MIMO (SU-MIMO) or a multiple user MIMO (multiple user MIMO). According to the forms and quantity of antenna combinations, the MIMO transmission may be 2D-MIMO, 3D-MIMO, FD-MIMO, or massive-MIMO, or may be diversity transmission, or precoded transmission, beamforming transmission, and the like.

A person skilled in the art should understand that embodiments of the present disclosure may be provided as a method, a system or a computer program product. Therefore, the present disclosure may use a form of hardware only embodiments, software only embodiments, or embodiments with a combination of software and hardware. In addition, the present disclosure may use a form of a computer program product implemented on one or more computer-usable storage media (including, but not limited to, a disk memory, an optical memory, and the like) that include computer-usable program code.

The present disclosure is described with reference to the flowcharts and/or block diagrams of the method, the device (system), and the computer program product according to the embodiments of the present disclosure. It should be understood that computer-executable instructions may be used to implement each process and/or each block in the flowcharts and/or the block diagrams and a combination of a process and/or a block in the flowcharts and/or the block diagrams. The computer-executable instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These processor-executable instructions may be stored in a processor-readable memory that can instruct the computer or any other programmable data processing device to work in a specific manner, so that the instructions stored in the processor-readable memory generate an artifact that includes instructions apparatus. The instruction apparatus implements a specific function in one or more processes in the flowcharts and/or in one or more blocks in the block diagrams.

The processor-executable instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It needs to be noted that division of the foregoing modules is merely logic function division. During actual implementation, some or all modules may be integrated into one physical entity, or the modules may be physically separated. The modules may be all implemented in a form of software invoked by a processing element, or may be all implemented in a form of hardware. Alternatively, some modules may be implemented in a form of software invoked by a processing element, and some modules are implemented in a form of hardware. For example, the determining module may be processing elements separately disposed, or may be integrated in a chip of the foregoing apparatus for implementation. In addition, the modules may alternatively be stored in the memory of the foregoing apparatus in a form of program code, and is invoked by a processing element of the foregoing apparatus to perform the functions of the modules. Implementations of other modules are similar to the implementation of the detection module. In addition, all or some of these modules may be integrated together, or may be implemented independently. The processing element herein may be an integrated circuit, and have a signal processing capability. In an implementation process, steps in the foregoing methods or the foregoing modules may be implemented by using a hardware integrated logical circuit in the processing element, or by using instructions in a form of software.

For example, the modules, units, subunits or submodules may be configured as one or more integrated circuits for implementing the foregoing method, for example, one or more ASICs, one or more microprocessors (DSPs) or one or more field programmable gate arrays (FPGAs). For another example, when one of the modules is implemented in the form of a processing element scheduling program code, the processing element may be a general-purpose processor, for example, a CPU or another processor that can invoke the program. In another example, the modules may be integrated and implemented in the form of a system-on-a-chip (SOC).

The terms such as "first" and "second" in the specification and claims of the present disclosure are only used to distinguish between similar objects, but are not used to describe a specific order or time sequence. It should be understood that the data thus used are interchangeable in appropriate circumstances and that embodiments of the present disclosure described herein, for example, are implemented in other sequences than those illustrated or described. In addition, the terms "include", "comprise" and any other variants are intended to cover a non-exclusive inclusion. For example, a process, method, system, product or device that includes a series of steps or units not only includes those steps or units specified expressly, but also includes other steps or units that are not specified expressly or are inherent to the process, method, product or device. In addition, the term "and/or" used in the description and claims represents at least one of associated objects. For example, A and/or B and/or C represents the following seven cases: A exists separately, B exists separately, C exists separately, both A and B exist, both B and C exist, both A and C exist, and all A, B, and C exist. Similarly, the use of "at least one of A and B" in this specification and the claims is to be understood as "A alone, B alone, or both A and B".

Obviously, persons skilled in the art can make various modifications and variations to the present disclosure without departing from the spirit and scope of the present disclosure. In this way, if these modifications and variations to the present disclosure fall within the scope of claims of the present disclosure and equivalent technologies thereof, the present disclosure also intends to cover these modifications and variations.

**Claims**

1. A physical downlink control channel (PDCCH) monitoring method, comprising:

   determining, by a terminal, at least one first cell in which PDCCH monitoring is performed, wherein the PDCCH monitoring is used for monitoring first downlink control information (DCI), and the first DCI is used for scheduling of transmission data in a plurality of cells; and
   performing, by the terminal, the PDCCH monitoring according to the at least one first cell,
   wherein the performing the PDCCH monitoring is: counting a monitoring task of the PDCCH monitoring for the at least one first cell.

2. The method according to claim 1, further comprising:

   obtaining first indication information, wherein the first indication information is used for indicating information about a cell in which the PDCCH monitoring is performed, wherein
   the determining, by the terminal, the at least one first cell in which the PDCCH monitoring is performed comprises: determining, according to the first indication information, the at least one first cell in which the PDCCH monitoring is performed.

3. The method according to claim 2, wherein the first indication information comprises a search space set parameter of the cell.

4. The method according to claim 3, wherein the determining, according to the first indication information, the at least one first cell in which the PDCCH monitoring is performed comprises:
   in a case that a quantity of candidate PDCCHs of at least one aggregation level comprised in the search space set parameter is greater than 0, determining the cell corresponding to the search space set parameter as the first cell.

5. The method according to claim 1, further comprising:

   determining a PDCCH monitoring occasion and candidate PDCCH information corresponding to each first cell, wherein the candidate PDCCH information comprises a control-channel element (CCE) aggregation level and a quantity of candidate PDCCHs corresponding to the CCE aggregation level, wherein
   the performing, by the terminal, the PDCCH monitoring according to the at least one first cell comprises:
   performing the PDCCH monitoring according to the PDCCH monitoring occasion and the candidate PDCCH information corresponding to each first cell.

6. The method according to claim 5, wherein the determining the PDCCH monitoring occasion and the candidate PDCCH information corresponding to each first cell comprises:

   in a case that the first cell is a scheduling cell, determining a PDCCH monitoring occasion and candidate PDCCH information corresponding to the scheduling cell according to a search space set parameter of the scheduling cell;
   in a case that the first cell is a scheduled cell, determining a PDCCH monitoring occasion and candidate PDCCH information corresponding to the scheduled cell according to a search space set parameter of a scheduling cell and a search space set parameter of the scheduled cell.

7. The method according to claim 5, wherein the determining the PDCCH monitoring occasion corresponding to each first cell comprises:

in a case that at least two first cells have an overlapping PDCCH monitoring occasion, selecting one first cell from the at least two first cells according to a first selection mode; and

determining the overlapping PDCCH monitoring occasion as a PDCCH monitoring occasion corresponding to the selected first cell,

wherein the first selection mode comprises: one or more of selecting a cell with the largest or smallest cell index value, selecting a scheduling cell, and presetting a selection order.

8. The method according to claim 5, wherein CCE aggregation levels corresponding to different first cells are different.

9. The method according to claim 5, wherein the determining the candidate PDCCH information corresponding to each first cell comprises:

in a case that CCE aggregation levels corresponding to at least two first cells are the same, determining a candidate PDCCH corresponding to each first cell in the at least two first cells according to second indication information,

wherein the second indication information comprises: identifiers of candidate PDCCHs corresponding to the at least two first cells, or identifiers of CCEs occupied by candidate PDCCHs corresponding to the at least two first cells respectively.

10. The method according to claim 9, wherein identifiers of candidate PDCCHs corresponding to different first cells are different, offset information of a CCE index corresponding to each first cell is the same, and the offset information is used for determining a reference position of the candidate PDCCH.

11. The method according to claim 9, wherein identifiers of CCEs occupied by candidate PDCCHs corresponding to different first cells are different, a CCE occupied by a candidate PDCCH corresponding to each first cell is determined according to a CCE occupied by a candidate PDCCH corresponding to a first cell preceding the each first cell according to a first sorting result, wherein the first sorting result is obtained by sorting the at least two first cells according to a preset order.

12. A physical downlink control channel (PDCCH) monitoring method, comprising:
sending, by a network side device, first indication information, wherein the first indication information is used for indicating information about a cell in which PDCCH monitoring is performed, the PDCCH monitoring is used for monitoring first downlink control information (DCI), and the first DCI is used for scheduling of transmission data in a plurality of cells.

13. The method according to claim 12, wherein the first indication information comprises a search space set parameter of the cell.

14. The method according to claim 13, wherein
in a case that a quantity of candidate PDCCHs of at least one aggregation level in the search space set parameter is greater than 0, the first indication information is used for indicating that the cell corresponding to the search space set parameter is the cell in which the PDCCH monitoring is performed.

15. The method according to claim 13, wherein the search space set parameter comprises a control-channel element (CCE) aggregation level, CCEs corresponding to different first cells have different aggregation levels, and the first cell is the cell in which the PDCCH monitoring is performed.

16. The method according to claim 13, wherein the search space set parameter comprises a CCE aggregation level; and the method further comprises:

in a case that CCE aggregation levels corresponding to at least two first cells are the same, sending second indication information,

wherein the second indication information comprises identifiers of candidate PDCCHs corresponding to the at least two first cells, or comprises identifiers of CCEs occupied by candidate PDCCHs corresponding to the at least two first cells respectively.

17. A physical downlink control channel (PDCCH) monitoring apparatus, applied to a terminal, the apparatus comprising a memory, a transceiver, and a processor,

wherein the memory is configured to store a computer program; the transceiver is configured to send and receive data under the control of the processor; and the processor is configured to read the computer program in the memory and perform the following operations:

determining at least one first cell in which PDCCH monitoring is performed, wherein the PDCCH monitoring is used for monitoring first downlink control information (DCI), and the first DCI is used for scheduling of transmission data in a plurality of cells; and
performing the PDCCH monitoring according to the at least one first cell,
wherein the performing the PDCCH monitoring is: counting a monitoring task of the PDCCH monitoring for the at least one first cell.

18. The apparatus according to claim 17, wherein the processor, when executing the program, further implements the following steps:

obtaining first indication information through the transceiver, wherein the first indication information is used for indicating information about a cell in which the PDCCH monitoring is performed; and
determining, according to the first indication information, the at least one first cell in which the PDCCH monitoring is performed.

19. The apparatus according to claim 18, wherein the first indication information comprises a search space set parameter of the cell.

20. The apparatus according to claim 19, wherein the processor, when executing the program, further implements the following step:
in a case that a quantity of candidate PDCCHs of at least one aggregation level comprised in the search space set parameter is greater than 0, determining the cell corresponding to the search space set parameter as the first cell.

21. The apparatus according to claim 17, wherein the processor, when executing the program, further implements the following steps:

determining a PDCCH monitoring occasion and candidate PDCCH information corresponding to each first cell, wherein the candidate PDCCH information comprises a control-channel element (CCE) aggregation level and a quantity of candidate PDCCHs corresponding to the CCE aggregation level; and
performing the PDCCH monitoring according to the PDCCH monitoring occasion and the candidate PDCCH information corresponding to each first cell.

22. The apparatus according to claim 21, wherein the processor, when executing the program, further implements the following step:

in a case that the first cell is a scheduling cell, determining a PDCCH monitoring occasion and candidate PDCCH information corresponding to the scheduling cell according to a search space set parameter of the scheduling cell;
in a case that the first cell is a scheduled cell, determining a PDCCH monitoring occasion and candidate PDCCH information corresponding to the scheduled cell according to a search space set parameter of a scheduling cell and a search space set parameter of the scheduled cell.

23. The apparatus according to claim 21, wherein the processor, when executing the program, further implements the following steps:

in a case that at least two first cells have an overlapping PDCCH monitoring occasion, selecting one first cell from the at least two first cells according to a first selection mode; and
determining the overlapping PDCCH monitoring occasion as a PDCCH monitoring occasion corresponding to the selected first cell,
wherein the first selection mode comprises: one or more of selecting a cell with the largest or smallest cell index value, selecting a scheduling cell, and presetting a selection order.

24. The apparatus according to claim 21, wherein CCE aggregation levels corresponding to different first cells are different.

25. The apparatus according to claim 21, wherein the processor, when executing the program, further implements the following step:

in a case that CCE aggregation levels corresponding to at least two first cells are the same, determining a candidate PDCCH corresponding to each first cell in the at least two first cells according to second indication information,

wherein the second indication information comprises: identifiers of candidate PDCCHs corresponding to the at least two first cells, or identifiers of CCEs occupied by candidate PDCCHs corresponding to the at least two first cells respectively.

26. A physical downlink control channel (PDCCH) monitoring apparatus, applied to a network side device, the apparatus comprising a memory, a transceiver, and a processor,

wherein the memory is configured to store a computer program; the transceiver is configured to send and receive data under the control of the processor; and the processor is configured to read the computer program in the memory and perform the following operation:

sending first indication information through the transceiver, wherein the first indication information is used for indicating information about a cell in which PDCCH monitoring is performed, the PDCCH monitoring is used for monitoring first downlink control information (DCI), and the first DCI is used for scheduling of transmission data in a plurality of cells.

27. A physical downlink control channel (PDCCH) monitoring apparatus, applied to a terminal, the apparatus comprising:

a first determining unit, configured to determine at least one first cell in which PDCCH monitoring is performed, wherein the PDCCH monitoring is used for monitoring first downlink control information (DCI), and the first DCI is used for scheduling of transmission data in a plurality of cells; and

a first monitoring unit, configured to perform the PDCCH monitoring according to the at least one first cell.

28. A physical downlink control channel (PDCCH) monitoring apparatus, applied to a network side device, the apparatus comprising:

a first sending unit, configured to send first indication information, wherein the first indication information is used for indicating information about a cell in which PDCCH monitoring is performed, the PDCCH monitoring is used for monitoring first downlink control information (DCI), and the first DCI is used for scheduling of transmission data in a plurality of cells.

29. A processor-readable storage medium, wherein the processor-readable storage medium stores program instructions, and the program instructions are used for enabling a processor to perform the steps of the physical downlink control channel (PDCCH) monitoring method according to any one of claims 1 to 11 or perform the steps of the PDCCH monitoring method according to any one of claims 12 to 16.

Fig. 1

Fig. 2

DCI for multi-cell scheduling

CELL-1 | PDSCH-1

CELL-2 | PDSCH-2

CELL-3 | PDSCH-3

Fig. 3

A terminal determines at least one first cell in which PDCCH monitoring is performed, where the PDCCH monitoring is used for monitoring first DCI, and the first DCI is used for scheduling of transmission data in a plurality of cells  401

The terminal performs the PDCCH monitoring according to the at least one first cell  402

Fig. 4

Fig. 5

Fig. 6

| | |
|---|---|
| CCE = 15 | CCE = 16 |
| CCE = 13 | CCE = 14 |

PDCCH3

| | |
|---|---|
| CCE = 11 | CCE = 12 |
| CCE = 9 | CCE = 10 |

PDCCH2

| | |
|---|---|
| CCE = 7 | CCE = 8 |
| CCE = 5 | CCE = 6 |

PDCCH1

| | |
|---|---|
| CCE = 3 | CCE = 4 |
| CCE = 1 | CCE = 2 |

PDCCH0

perform monitoring in CELL-1

Aggregation level = 2

| | |
|---|---|
| CCE = 15 | CCE = 16 |
| CCE = 13 | CCE = 14 |
| CCE = 11 | CCE = 12 |
| CCE = 9 | CCE = 10 |
| CCE = 7 | CCE = 8 |
| CCE = 5 | CCE = 6 |
| CCE = 3 | CCE = 4 |
| CCE = 1 | CCE = 2 |

PDCCH7

| | |
|---|---|
| CCE = 15 | CCE = 16 |
| CCE = 13 | CCE = 14 |

PDCCH6

| | |
|---|---|
| CCE = 11 | CCE = 12 |
| CCE = 9 | CCE = 10 |

PDCCH5

| | |
|---|---|
| CCE = 7 | CCE = 8 |
| CCE = 5 | CCE = 6 |

PDCCH4

| | |
|---|---|
| CCE = 3 | CCE = 4 |
| CCE = 1 | CCE = 2 |

perform monitoring in CELL-2

Aggregation level = 4

Fig. 7

PDCCH9

| CCE = 15 | CCE = 16 |
|---|---|
| CCE = 13 | CCE = 14 |
| CCE = 11 | CCE = 12 |
| CCE = 9 | CCE = 10 |
| CCE = 7 | CCE = 8 |
| CCE = 5 | CCE = 6 |
| CCE = 3 | CCE = 4 |
| CCE = 1 | CCE = 2 |

PDCCH8

perform monitoring in CELL-3

Aggregation level = 8

| CCE = 15 | CCE = 16 |
|---|---|
| CCE = 13 | CCE = 14 |
| CCE = 11 | CCE = 12 |
| CCE = 9 | CCE = 10 |
| CCE = 7 | CCE = 8 |
| CCE = 5 | CCE = 6 |
| CCE = 3 | CCE = 4 |
| CCE = 1 | CCE = 2 |

PDCCH10

| CCE = 15 | CCE = 16 |
|---|---|
| CCE = 13 | CCE = 14 |
| CCE = 11 | CCE = 12 |
| CCE = 9 | CCE = 10 |
| CCE = 7 | CCE = 8 |
| CCE = 5 | CCE = 6 |
| CCE=3 | CCE=4 |
| CCE=1 | CCE = 2 |

perform monitoring in CELL-4

Aggregation level = 16

Fig. 8

| CCE = 15 | CCE = 16 |
| CCE = 13 | CCE = 14 |
| CCE = 11 | CCE = 12 |
| CCE = 9 | CCE = 10 |
| CCE = 7 | CCE = 8 |
| CCE = 5 | CCE = 6 |
| CCE = 3 | CCE = 4 |
| CCE = 1 | CCE = 2 |

PDCCH3

PDCCH2

| CCE = 15 | CCE = 16 |
| CCE = 13 | CCE = 14 |
| CCE = 11 | CCE = 12 |
| CCE = 9 | CCE = 10 |
| CCE = 7 | CCE = 8 |
| CCE = 5 | CCE = 6 |
| CCE = 3 | CCE = 4 |
| CCE = 1 | CCE = 2 |

perform monitoring in CELL-3

Aggregation level = 4

PDCCH1

PDCCH0

| CCE = 15 | CCE = 16 |
| CCE = 13 | CCE = 14 |
| CCE = 11 | CCE = 12 |
| CCE = 9 | CCE = 10 |
| CCE = 7 | CCE = 8 |
| CCE = 5 | CCE = 6 |
| CCE = 3 | CCE = 4 |
| CCE = 1 | CCE = 2 |

perform monitoring in CELL-2

Aggregation level = 4

Fig. 9

| | | |
|---|---|---|
| CCE=1 5 | CCE=1 6 | PDCCH3 |
| CCE=1 3 | CCE=1 4 | |
| CCE=1 1 | CCE=1 2 | PDCCH2 |
| CCE=9 | CCE=1 0 | |

perform monitoring in CELL-3

| | |
|---|---|
| CCE=7 | CCE=8 |
| CCE=5 | CCE=6 |
| CCE=3 | CCE=4 |
| CCE=1 | CCE=2 |

Last CCE occupied by the last PDCCH of CELL-2

Aggregation level = 4

| | |
|---|---|
| CCE=1 5 | CCE=1 6 |
| CCE=1 3 | CCE=1 4 |
| CCE=1 1 | CCE=1 2 |
| CCE=9 | CCE=1 0 |
| CCE=7 | CCE=8 |
| CCE=5 | CCE=6 |
| CCE=3 | CCE=4 |
| CCE=1 | CCE=2 |

| |
|---|
| CCE=1 5 / CCE=1 6 |
| CCE=1 3 / CCE=1 4 |
| CCE=1 1 / CCE=1 2 |
| CCE=9 / CCE=1 0 |
| CCE=7 / CCE=8 |
| CCE=5 / CCE=6 |
| CCE=3 / CCE=4 |
| CCE=1 / CCE=2 |

PDCCH1

PDCCH0

perform monitoring in CELL-2

Aggregation level = 4

Fig. 10

A network side device sends first indication information, where the first indication information is used for indicating information about a cell in which PDCCH monitoring is performed, the PDCCH monitoring is used for monitoring first DCI, and the first DCI is used for scheduling of transmission data in a plurality of cells

~1101

Fig. 11

~1210

Processor

~1220

Memory

Bus interface

~1200

Transceiver

~1230

User interface

Fig. 12

1310

Processor

1320

Memory

Bus interface

1300

Transceiver

Fig. 13

1401

First determining unit

1402

First monitoring unit

Fig. 14

1501

First sending unit

Fig. 15

| INTERNATIONAL SEARCH REPORT | International application No. |
| --- | --- |
| | **PCT/CN2023/107792** |

**A. CLASSIFICATION OF SUBJECT MATTER**

H04W 72/04(2023.01)i

According to International Patent Classification (IPC) or to both national classification and IPC

**B. FIELDS SEARCHED**

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNTXT, ENTXT, CNKI, DWPI, 3GPP: 多小区调度, 跨小区调度, 下行控制信息, 物理下行控制信道, 检测, 盲检测, multi-cell scheduling, DCI, PDCCH, detect, blind

**C. DOCUMENTS CONSIDERED TO BE RELEVANT**

| Category* | Citation of document, with indication, where appropriate, of the relevant passages | Relevant to claim No. |
| --- | --- | --- |
| X | CN 113473634 A (INTEL CORP.) 01 October 2021 (2021-10-01) description, paragraphs 53-54, 64, 159, and 208, and claims 1-2 | 1-29 |
| A | CN 110831181 A (HUAWEI TECHNOLOGIES CO., LTD.) 21 February 2020 (2020-02-21) entire document | 1-29 |
| A | US 2020007295 A1 (INTEL IP CORP.) 02 January 2020 (2020-01-02) entire document | 1-29 |
| A | ERICSSON. "On Blind Detection of Downlink Control Channels" *TSG-RAN WG1 #87 R1-1612909*, 18 November 2016 (2016-11-18), entire document | 1-29 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 September 2023** | **15 September 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/107792**

| Patent document cited in search report | | | Publication date (day/month/year) | Patent family member(s) | | | Publication date (day/month/year) |
|---|---|---|---|---|---|---|---|
| CN | 113473634 | A | 01 October 2021 | None | | | |
| CN | 110831181 | A | 21 February 2020 | WO | 2020030088 | A1 | 13 February 2020 |
| US | 2020007295 | A1 | 02 January 2020 | WO | 2018175806 | A1 | 27 September 2018 |
| | | | | EP | 3602943 | A1 | 05 February 2020 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210837581